# EUROPÄISCHE PATENTANMELDUNG

(11) **EP 4 811 059 A1**
(43) Veröffentlichungstag der Anmeldung: **23.09.2026**
(21) Anmeldenummer: 26163814.2
(22) Anmeldetag: 10.03.2026
(51) Int. Cl.: G05B 19/418, G05B 23/02, G06N 3/08

(54) **SYSTEM UND VERFAHREN ZUM MONITORING VON EREIGNISSEN, INSBESONDERE STOPPS, ZUM ERKENNEN VON URSACHEN, UND ZUM GENERIEREN VON HANDLUNGSEMPFEHLUNGEN ZUR FEHLERBEHEBUNG, SOWIE COMPUTERPROGRAMMPRODUKT UND VERWENDUNG**

(30) Priorität: 10.03.2025 DE 102025108984; 10.03.2025 DE 202025101266 U
(71) Anmelder: Opti-Run GmbH, 44577 Castrop-Rauxel (DE)
(72) Erfinder: Ahmetovic, Almir, 44575 Castrop-Rauxel (DE)
(74) Vertreter: Tanner, Lukas

(57) **Zusammenfassung**

Bei automatisierten Prozessen zum Be-/Verarbeiten von Verpackungsmaterial kann es zu Fehlern und damit einhergehenden Stopps einer Fertigungslinie kommen. Die involvierten Fachkräfte müssen daher versuchen, einen Stopp des Bearbeitungsprozesses so schnell wie möglich zu beheben. Erfindungsgemäß wird ein System zum Monitoring von wenigstens einem Typ Ereignis, insbesondere Stopp einer offenen Fertigungslinie für Verpackungsmaterial bereitgestellt, zum Erkennen von Fehlern, und zum Generieren wenigstens einer Handlungsempfehlung zur Fehlerbehebung durch eine Fachkraft, wobei das System eine Recheneinheit mit Datenspeicher und mehrere Sensoren und optische Erfassungseinheiten aufweist; wobei das System eingerichtet ist, Daten betreffend zumindest den Bewegungspfad entlang wenigstens zweier Fertigungslinienabschnitte von wenigstens einer die Fertigungslinie betreuenden Fachkraft zu erfassen und in Reaktion auf ein/das Ereignis, insbesondere Stopp zumindest eine zeitlich vordefinierbare Sequenz des Bewegungspfads der Fachkraft mit wenigstens einem spezifischen Typ Ereignis/Stopp zu korrelieren, zum Generieren der wenigstens einen Handlungsempfehlung und zum Ausgeben wenigstens einer Handlungsaufforderung. Hierdurch können die Fachkräfte z.B. in Echtzeit instruiert werden.

## Beschreibung

### TECHNISCHES GEBIET

Die vorliegende Erfindung betrifft ein System zum Monitoring von wenigstens einem Typ Ereignis, insbesondere Stopp einer Fertigungslinie zur Bearbeitung von Verpackungsmaterial, zum Erkennen von den wenigstens einen Typ Stopp/Ereignis hervorrufender Fehler oder Ursachen, und zum Generieren wenigstens einer Handlungsempfehlung zur Fehlerbehebung, wobei das System eine Recheneinheit mit Datenspeicher aufweist, die in Kommunikation mit einer Mehrzahl von die Funktionsweise der Fertigungslinie überwachenden Sensoren und einer Mehrzahl von optischen Erfassungseinheiten steht, von denen jeweils wenigstens eine am entsprechenden Fertigungslinienabschnitt mit einem Sichtfeld von oben den entsprechenden Fertigungslinienabschnitt einsehend anordenbar ist. Ferner betrifft die vorliegende Erfindung ein entsprechendes Verfahren zum Monitoring von Ereignissen, insbesondere Stopps, zum Erkennen von Fehlern bzw. Ursachen, und zum Generieren von Handlungsempfehlungen, insbesondere beim Optimieren von Prozessen zur automatisierten Bearbeitung von Kartonagen. Nicht zuletzt betrifft die vorliegende Erfindung auch die Verwendung von Mitteln zur automatisierten Datenverarbeitung zum Vorgeben der Art und Weise des Erfassens und Auswertens von (Video-)Daten betreffend Bearbeitungsprozesse einer Fertigungslinie zur Bearbeitung von Verpackungsmaterial, und zum Implementieren einer Fehleranalyse- und Fehlerbehebungsanleitungs-Funktionalität in Abstimmung mit einem zentralen Steuerungs-/Regelungssystem der Fertigungslinie in Reaktion auf einen Stopp der Fertigungslinie, und zum Ausgeben wenigstens einer Handlungsaufforderung zur Fehlerbehebung, bzw. eine entsprechende Implementierung eines Computerprogrammprodukts. Insbesondere betrifft die Erfindung ein System und ein Verfahren gemäß dem Oberbegriff des jeweiligen unabhängigen Anspruchs.

### HINTERGRUND DER ERFINDUNG

Verpackungsmaterialien wie z.B. Kartonagen werden üblicherweise auf vergleichsweise langen Fertigungslinien verarbeitet, üblicherweise bei mehreren aufeinanderfolgenden funktional voneinander abgegrenzten Prozessschritten wie z.B. Schneiden, Falten, Stoppen und/oder Ausrichten, Kleben bzw. Leimen oder dergleichen. Auch der Materialeinzug (Zufuhr) kann dabei als eigener funktionaler Abschnitt ausgestaltet sein. Die jeweilige Fertigungslinie, z.B. umfassend eine Faltschachtelklebemaschine/-anlage, wird üblicherweise durch Fachkräfte betreut und überwacht, beispielsweise hinsichtlich korrektem Materialeinzug oder Aufreihung der Charge auf dem Förderband (z.B. geschuppt-überlappend oder nicht überlappend hintereinander). Derartige Fertigungslinien werden ingenieursseitig bewusst möglichst offen zugänglich (zumindest von den Seiten) und variabel konzipiert, insbesondere da Verpackungsmaterialien wie z.B. Kartonagen, insbesondere Faltschachteln, sehr unterschiedlich ausgestaltet sein können (diesbezügliche Stichworte und Komponenten: Größenanpassung, Bahnverstellung, Seitenausrichter, Einzugsriemen, Stellzungen, Servo-Antriebskomponenten, Längenüberwachung, Neigungsverstellung, Geschwindigkeitsanpassung, mehrstufige Faltung, Pressbandverstellung, Pressdruckzonen, Auslaufhöhenverstellung), so dass die jeweilige Fertigungslinie üblicherweise auftragsspezifisch eingestellt wird. Läuft der Prozess dann, so kann die jeweilige Fachkraft üblicherweise an mehreren Stellen der Fertigungslinie in den Prozess eingreifen und z.B. die Ausrichtung einzelner Verpackungsmaterial-Chargen korrigieren. Im Falle eines fertigungsprozessbedingten, material- und/oder maschinenseitig begründeten Fehlers stoppt die Fertigungslinie automatisch oder muss gestoppt werden. Die Fachkraft muss dann die Fehlerstelle möglichst schnell auffinden, den Fehler möglichst schnell erkennen und auch möglichst schnell beheben, insbesondere um wenig Zeit für den Ausfall der Produktion zu verschwenden. Es versteht sich von selbst, dass für entsprechende Expertise der zu involvierenden Fachkraft eine vergleichsweise lange Einarbeitungszeit erforderlich ist, möglicherweise über mehrere Jahre. Im Umkehrschluss ist verständlich, dass das Einfahren einer Fertigungslinie nicht nur einige wenige, sondern sehr zahlreiche Iterationen erfordern kann, z.B. eine 20fache Wiederholung eines Teilschrittes, bis dieser für den späteren Lauf der Produktion als standardmäßig vordefiniert vorgegeben werden kann. Es versteht sich auch, dass die jeweilige Fachkraft beim Fehlerbehebungsvorgang je nach Erfahrung unter vergleichsweise großem zeitlichen und gegebenenfalls auch körperlichen und/oder psychischen Druck, z.B. wenn bei einer Fertigungslinie von über 15m Länge die Fehlerstelle nicht sofort gefunden wird, was eine Ursache für weitere Fehlerquellen (nun seitens der Fachkraft) und auch für Risiken insbesondere hinsichtlich Arbeitssicherheit sein mag.

Davon ausgehend besteht Interesse an verbesserten prozessualen Rahmenbedingungen für die Fehlererkennung im Zusammenhang mit Stopps und für eine/die zumindest teilweise manuell erfolgende Fehlerbehebung unmittelbar in Reaktion auf einen jeweiligen Stopp, und nicht zuletzt auch Interesse an verbesserter Arbeitsergonomie, also an verbesserten Arbeitsbedingungen für die involvierten Fachkräfte.

Gemäß dem Stand der Technik wird bereits mit unterschiedlichsten Arte von Sensorik und Überwachungskameras gearbeitet, insbesondere in unmittelbarem Kontext einer Prozessoptimierung simultan zur Fertigung. Beispielhaft kann die Veröffentlichung DE 603 17 073 T2 genannt werden, welche ein Mehrfachkamera-Prüfsystem im Kontext einer Maschinensteuerung/-regelung insbesondere zwecks Qualitätsüberwachung im laufenden Prozess beschreibt.

Ausgehend vom Stand der Technik ist ein Bedarf an Systemen und Verfahren für das erleichterte und möglichst auch zeiteffiziente manuelle Eingreifen zur Fehlerbehebung bei zumindest teilweise automatisierten Prozessen zur Bearbeitung von Verpackungsmaterial zu spüren. Nicht zuletzt besteht insbesondere hinsichtlich Entlastung der involvierten Fachkräfte auch Interesse an größerer systemseitiger Unterstützung im Kontext manueller Fehlersuche/-behebung in Reaktion auf Stopps.

### ZUSAMMENFASSUNG DER ERFINDUNG

Aufgabe ist, ein System und ein Verfahren zum Erleichtern des Erkennens und Verstehens von insbesondere einen Stopp eines zumindest teilweise automatisierten Verpackungsmaterialbearbeitungsprozesses verursachenden Fehlern bereitzustellen, wodurch ein manuelles Eingreifen wenigstens einer Fachkraft in den Prozess oder in eine entsprechende Fertigungslinie vereinfacht und auch auf besonders effiziente Art und Weise ermöglicht werden kann. Auch ist es Aufgabe, ein solches System bzw. Verfahren derart auszugestalten, dass ein Erkennen von den Stopp begründender Randbedingungen durch die jeweilige involvierte Fachkraft erleichtert werden kann, insbesondere zum Verringern der situativen Widrigkeiten, mit welchen die involvierte Fachkraft im Moment des Stopps und vor dem Ziel einer effizienten Fehlerbehebung konfrontiert ist. Nicht zuletzt ist es Aufgabe, ein solches System bzw. Verfahren derart auszugestalten, dass ein Aufbereiten der im Kontext des Stopps erfassten Informationen derart gelingt, dass die involvierte Fachkraft in die Lage versetzt wird, die entsprechende Fehlerursache schnell, effizient und nicht zuletzt auch auf arbeitsschutzgemäß sichere Weise zu beheben.

Diese Aufgabe wird durch ein System gemäß Anspruch 1, durch eine damit ausgestattete Fertigungslinie, sowie durch ein Verfahren gemäß dem nebengeordneten Verfahrensanspruch sowie durch Verwendungen gemäß dem entsprechenden nebengeordneten Verwendungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird ein System zum Monitoring von wenigstens einem Typ Ereignis, insbesondere Stopp (zeitweisem Ausfall) einer Fertigungslinie für zumindest teilweise automatische, bevorzugt vollautomatische Bearbeitung von Verpackungsmaterial, insbesondere Kartonagen, zum Erkennen von den wenigstens einen Typ Stopp (bzw. das entsprechende Ereignis) hervorrufender Fehler/Ursachen, und zum bevorzugt fehlerspezifischen Generieren wenigstens einer visuell und/oder akustisch erfassbaren Handlungsempfehlung zur Fehlerbehebung insbesondere für wenigstens eine die Fertigungslinie bedienende/überwachende Fachkraft, wobei die jeweilige Fertigungslinie eine offen zugängliche Fertigungslinie von z.B. über 10m Länge mit mehreren funktional voneinander abgrenzbaren Prozessschritten jeweils mit manueller Eingriffsmöglichkeit zur manuellen Fehlerbehebung im entsprechenden Bereich/Fertigungslinienabschnitt des jeweiligen Prozessschrittes ist (bzw. ist das System für eine solche Fertigungslinie eingerichtet), wobei das System eine Recheneinheit mit Datenspeicher aufweist, die in Kommunikation mit einer Mehrzahl von die Funktionsweise der Fertigungslinie überwachenden Sensoren und einer Mehrzahl von optischen Erfassungseinheiten steht (bzw. jeweils in Kommunikation bringbar ist, insbesondere drahtlos z.B. über Nahfeldkommunikationsprotokolle oder das Internet), von denen jeweils wenigstens eine am entsprechenden Fertigungslinienabschnitt mit einem Sichtfeld von oben den entsprechenden Fertigungslinienabschnitt einsehend anordenbar/angeordnet ist, bevorzugt in Ausrichtung zumindest annähernd lotrecht nach unten;

Erfindungsgemäß wird vorgeschlagen, dass das System eingerichtet ist, Daten betreffend zumindest den Bewegungspfad entlang wenigstens zweier Fertigungslinienabschnitte von wenigstens einer die Fertigungslinie betreuenden Fachkraft zu erfassen und in Reaktion auf einen Stopp bzw. das entsprechende Ereignis zumindest eine zeitlich vordefinierbare Sequenz des Bewegungspfads der Fachkraft mit wenigstens einem spezifischen Typ Stopp/Ereignis zu korrelieren, zum bevorzugt fehlerspezifischen Generieren der wenigstens einen Handlungsempfehlung und zum Ausgeben wenigstens einer Handlungsaufforderung, z.B. in Dateiform, bevorzugt in Videodateiform, und/oder an wenigstens einer visuellen und/oder akustischen Anzeigeeinheit des Systems. Dies erleichtert ein schnelles Erkennen und Verstehen und auch Lokalisieren einer jeweiligen Fehlerursache und ermöglicht ein besonders zielgerichtetes manuelles Eingreifen der entsprechenden involvierten Fachkraft, begünstigt also eine besonders effiziente Art und Weise der Fehlerbehebung, so dass der Fertigungsprozess zeitnah neu gestartet werden kann (wenig Ausfall bzw. nur geringe zeitliche Verzögerungen). Dabei kann auch Information zum Stopp bzw. Fehler bzw. Ereignis systemseitig aufbereitet und wirksam bzw. gut verständlich für die jeweilige Fachkraft ausgegeben werden, sei es im Feld (z.B. lokal an der Fehlerstelle oder zumindest in deren Bereich), sei es in Form von aufbereiteten Unterlagen (z.B. Schulungsunterlagen, Videodateien für das Training von Fachkräften). Die Projektion lotrecht nach unten ermöglicht dabei einerseits eine besonders exakte Erfassung der Bewegung bzw. des Bewegungsmusters einer Fachkraft, andererseits kann die Fachkraft anonym erfasst werden, insbesondere ohne dass notwendigerweise eine Anonymisierung systemseitig vorgesehen sein muss.

Es hat sich gezeigt, dass durch gezieltes Monitoring der üblicherweise seitens der Fachkräfte vorgenommenen Maßnahmen in Reaktion auf einen außerplanmäßigen Stopp der Fertigungslinie (oder in Reaktion auf ein vergleichbares Ereignis) eine deutlich leichtere Schulung und Fortbildung von Fachkräften und damit im Effekt eine deutlich verbesserte (technische) Betreuung der jeweiligen Fertigungslinie realisierbar ist. Dafür geht die vorliegende Erfindung von der Erkenntnis aus, dass es von großer Bedeutung ist, die bisherige Fehlerbehebungspraxis durch Analyse der von den Fachkräften üblicherweise vorgenommenen Maßnahmen auszuwerten und Optimierungsmöglichkeiten aufzuzeigen, sei es zur Zeiteinsparung, sei es zur gezielteren Fehlererkennung. Insbesondere unter Bezugnahme auf die körperlichen Bewegungen der jeweiligen Fachkraft, insbesondere in lotrechter Draufsicht (auch anonymisiert) und bei zeitlicher Einschränkung auf ein vordefinierbares vergleichsweise kleines Zeitfenster vor/nach dem jeweiligen außerplanmäßigen Maschinenstopp (bzw. vergleichbares Ereignis), kann das hier beschriebene System einerseits in Echtzeit (also ohne nennenswerte zeitliche Verzögerungen während des Fehlerbehebungsprozesses) bei der jeweiligen Fehlerbehebungsmaßnahme assistieren, andererseits können Schulungsunterlagen generiert werden zum Training von Fachkräften im Nachgang basierend auf unmittelbar im Feld gewonnener Erfahrungswerte, ohne dass damit ein spürbarer redaktioneller oder dokumentarischer Aufwand für die Fachkräfte oder eine die jeweilige Fertigungslinie betreibende Einheit einher geht.

Sofern gemäß der vorliegenden Offenbarung von wenigstens einem Typ Stopp gesprochen wird, so ist darunter synonym eine Bezugnahme auf eine spezifische Fertigungslinie und einen außerplanmäßigen zeitweisen Ausfall dieser Fertigungslinie bzw. des Fertigungsprozesses und demnach auch auf spezifische Fehler bzw. Ursachen zu verstehen. Anders ausgedrückt: das hier beschriebene implementierte System zum Generieren von Fehlerbehebungs-Handlungsempfehlungen/- aufforderungen bezieht die jeweilige Handlungsempfehlung vorteilhaft auf einen spezifischen Typ Fertigungslinie, auf einen spezifischen Typ Stopp, und somit auch auf einen bestimmten Teilprozess der Verpackungsmaterialfertigung, kann demnach basierend auf dem vorliegend beschriebenen Konzept reproduzierbar auch z.B. als für spezifische Fertigungslinien standardisierbare Schulungsunterlage zum Anlernen oder Weiterbilden von Fachkräften genutzt werden, beispielsweise wenn eine neue Fertigungslinie für eine neue Auftragsfertigung neu eingefahren wird mit noch nicht darauf eingespielten Fachkräften, gegebenenfalls auch unter auftragsspezifischer Bezugnahme auf bestimmte Arten von Verpackungsmaterial(chargen). Gleichwohl ist zu verstehen, dass der Stopp bzw. der wenigstens eine Typ Stopp auch ein andersartiges Ereignis als ein Stopp sein kann, z.B. ein vergleichbares Ereignis wie z.B. ein sensorisch und/oder optisch erfasster Schaden einer Komponente der Fertigungslinie und/oder einer Komponente des zu verarbeitenden Materials. Zwar ist die Implementierung der vorliegenden Erfindung vornehmlich intendiert für den Zweck der Auswertung technischer Zusammenhänge im Kontext von Stopps, gleichwohl kann auch ein andersartiges Ereignis den hier beschriebenen Auswerteprozess anstoßen, beispielsweise irgendein Signal, irgendein Trigger einer sensorischen Komponente oder einer Steuerung/Regelung, und nicht zuletzt auch eine manuelle Systemeingabe z.B. zur Anforderung einer Dokumentation, Schulungsunterlage (bzw. Handlungsempfehlung) und/oder Handlungsaufforderung (beispielsweise zu einem Zeitpunkt, zu welchem die Einrichtung einer Fertigungslinie auf eine neue Charge Verpackungsmaterial abgeschlossen wurde, und/oder ein entsprechender Einfahr-Vorgang). Somit wird im Folgenden bei Bezugnahme auf einen Stopp zumindest implizit auch auf ein solches vergleichbares Ereignis Bezug genommen, welches jeweils fertigungslinienspezifisch als gleichwertiger Trigger implementiert werden kann.

Sofern gemäß der vorliegenden Offenbarung von Handlungsempfehlung gesprochen wird, so ist darunter allgemein eine systemseitig vorgeschlagene Maßnahme zu verstehen, sei es nun eine akut im Feld auszuführende Fehlerbehebungsmaßnahme, sei es eine Handlungsempfehlung im Rahmen einer Schulungsunterlage.

Sofern gemäß der vorliegenden Offenbarung von Fehlerbehebung gesprochen wird, so ist darunter jedenfalls eine zumindest teilweise manuelle Fehlerbehebung zu verstehen, also ein Fehlerbehebungsprozess, welcher das Eingreifen einer Fachkraft erfordert. Anders ausgedrückt: Die Fertigungslinie ist keine vollständig autonom operierende Fertigungslinie, und die hier beschriebenen Bearbeitungsprozesse sind keine vollständig autonom selbstjustierenden Bearbeitungsprozesse, sondern sind offen im Sinne der vorliegenden Offenbarung, erfordern also von Zeit zu Zeit jeweils ein händisches bzw. menschliches Eingreifen. Dies ist insbesondere durch die Art und individuelle Formgebung der zu verarbeitenden Verpackungsmaterialien, insbesondere Kartonagen begründet.

Sofern gemäß der vorliegenden Offenbarung von Handlungsaufforderung gesprochen wird, so ist darunter synonym eine über wenigstens eine Anzeigeeinheit an einer jeweiligen Fertigungslinie ausgegebene Handlungsaufforderung zur unmittelbaren manuellen Fehlerbehebung während des (gestoppten) Fertigungsprozesses zu verstehen, also eine Art Lotsendienstleistung für die involvierte Fachkraft vor Ort insbesondere im Bereich der Fehlerstelle an der Fertigungslinie.

Sofern gemäß der vorliegenden Offenbarung von Bewegungspfads einer/der jeweiligen involvierten Fachkraft gesprochen wird, so ist darunter einerseits eine Bewegung des gesamten Körpers der Fachkraft relativ zum Untergrund zu verstehen, also eine Relativbewegung der Person als solcher in Projektion auf den Untergrund (z.B. Boden einer Maschinenhalle), und andererseits auch eine Relativbewegung wenigstens eines Körperteils, z.B. eines Arms, der Fachkraft z.B. relativ zu einer Maschinen-/Anlagenkomponente, z.B. relativ zu einem Einzug oder einer Bahnverstellungskomponente. So kann das hier beschriebene (Monitoring-)System sowohl für einen Bewegungsablauf oder eine Bewegungsabfolge von Personen als auch für eine Bewegungsabfolge von Körperteilen, z.B. einer Arm- oder Fingerbewegung implementiert sein/werden. Basierend auf der vorliegenden Offenbarung kann der Fachmann vorgeben, auf welche Weise und in welchem Detaillierungsgrad, z.B. phasenabhängig als Funktion der momentanen relativen Position der Fachkraft relativ zur entsprechenden Fertigungslinien-Komponente, der Bewegungspfad des gesamten Körpers und/oder einzelner Körperteile analysiert und z.B. bezüglich einzelner Köperbewegungen (z.B. Armbewegung) ausgewertet werden soll.

Sofern gemäß der vorliegenden Offenbarung von Monitoring von wenigstens einem Typ Stopp bzw. Ereignis zum Erkennen von den wenigstens einen Typ Stopp bzw. das Ereignis hervorrufender Fehler/Ursachen gesprochen wird, so ist darunter synonym zumindest die erfindungsgemäß vorgeschlagene Kombination der Maßnahmen Erfassen, Korrelieren, Generieren, Ausgeben zu verstehen, bzw. deren hier beschriebenes Zusammenwirken. Das hier beschriebene Erfassen bezieht sich dabei in erster Linie auf eine Datenerhebung bezüglich Bewegungen oder Bewegungsmustern der jeweils involvierten Fachkraft; wahlweise kann das Erfassen auch eine Datenerhebung betreffend den Fertigungs-/Bearbeitungsprozess als solchen umfassen, wenngleich eine solche Datenerhebung auch durch ein Steuerungssystem der jeweiligen Fertigungslinie selbst mit entsprechender messtechnischer bzw. kameratechnischer Ausstattung erledigt werden kann (insofern kann auch eine Datenübergabe oder ein Datenaustausch/-abgleich mit dem hier beschriebenen Monitoring-System erfolgen). Wahlweise kann das hier beschriebene Erfassen zumindest teilweise auch mittels fertigungslinienspezifischer Erfassungstechnologie (insbesondere Sensorik, Kameraausstattung) erfolgen, also auch das Erfassen von Bewegungen einer involvierten Fachkraft; wahlweise kann das Korrelieren zumindest teilweise auch basierend auf Daten erfolgen, die seitens eines fertigungslinienspezifischen Systems und/oder seitens eines zentral zugänglichen Servers bereitgestellt sind/werden; wahlweise kann das Ausgeben zumindest teilweise auch mittels fertigungslinienspezifischer Ausgabetechnologie (insbesondere Bediener-Terminal, grafische Benutzerschnittstelle, Anzeigeeinheiten) erfolgen.

Sofern gemäß der vorliegenden Offenbarung von Maschine oder Anlage gesprochen wird, so ist darunter standardmäßig ein Bestandteil einer jeweiligen Fertigungslinie zu verstehen, z.B. ein Fertigungslinienabschnitt mit vordefinierter Funktion wie z.B. Schneiden oder Falten oder Kleben.

Sofern gemäß der vorliegenden Offenbarung von Maschinenstopp gesprochen wird, so ist darunter synonym eine Bezugnahme auf einen insbesondere fehlerbedingten Stopp einer Fertigungslinie oder eines Fertigungslinienabschnitts oder einer Maschinenkomponente der Fertigungslinie zu verstehen. Gleichwohl bezieht sich die vorliegende Erfindung auch auf Implementierungen, die ein vergleichbares Ereignis oder auch eine manuelle Anforderung als Trigger nutzen, zum Anstoßen des hier beschriebenen Monitoring- bzw. Auswertungs-Vorgangs.

Sofern gemäß der vorliegenden Offenbarung von Benutzer oder Nutzer oder Bediener gesprochen wird, so ist darunter synonym eine entsprechend involvierte Fachkraft zu verstehen, welche mittels des hier beschriebenen Systems Unterstützung bei der Fehlerbehebung an der jeweiligen Fertigungslinie erhält.

Personifizierte Begriffe, soweit sie hier nicht im Neutrum formuliert sind, können im Rahmen der vorliegenden Offenbarung alle Geschlechter betreffen. Etwaige hier verwendete fremdsprachige Ausdrücke oder Abkürzungen sind jeweils branchenübliche Fachausdrücke und sind dem Fachmann geläufig. Etwaige dazu synonym verwendete/verwendbare deutschsprachige Begriffe können hier der Vollständigkeit halber in (Klammern) angegeben werden, oder vice versa.

Die vorliegende Erfindung basiert auch auf dem Konzept, die Interaktion zwischen Mensch und Fertigungslinie dadurch zu erleichtern, dass das menschliche Verhalten in Reaktion auf einen Stopp bzw. ein Ereignis der Fertigungslinie analysiert wird und als Grundlage für eine Handlungsempfehlung oder Handlungsaufforderung genutzt wird, sei es im Feld in einer jeweiligen momentanen Situation an der Fertigungslinie, sei es im Rahmen von Fortbildung und/oder Schulungsunterlagen für gegebenenfalls erst anzulernende oder noch weiter auszubildende Fachkräfte, z.B. auch im Rahmen von Neubesetzungsmaßnahmen (andere/neue Fachkräfte werden einer bestimmten Fertigungslinie oder einem bestimmten Verpackungsmaterialbearbeitungsprozess zugewiesen). Wie oben bereits erwähnt, werden Fertigungslinien für Verpackungsmaterialien, insbesondere Kartonagen, üblicherweise auftragsspezifisch eingerichtet und eingefahren, so dass die vorliegende Erfindung potentiell auch mit jedem neuen Auftrag einer Auftragsfertigung zum Einsatz kommen kann zur Vorbereitung der involvierten Mitarbeiter bzw. Fachkräfte. Die hier beschriebenen weitgehend offenen Fertigungsprozesse mit manuellen Eingriffsmöglichkeiten an mehreren (zumindest seitlich zugänglichen) Abschnitten unterscheiden sich demnach grundlegend von z.B. einem reinen Herstellungsprozess beispielsweise in der Papierindustrie, bei welchem manuelle Fehlerbehebung üblicherweise nicht ohne weiteres realisierbar ist (allein da die bewegten Werkstücke bzw. Papierrollen viel zu massiv sind, um manuell ausgerichtet zu werden).

Es ist zu verstehen, dass das hier beschriebene (Monitoring-)System weitgehend unabhängig von einem (zentralen) Steuerungs-/Regelungssystem betreffend den Fertigungsprozess als solchen implementierbar ist. Eine Optimierung von Maschinen- und Anlagenkomponenten in industriellen Anwendungen insbesondere zwecks prozessualer Effizienz- und Leistungssteigerung kann zwar mittels des vorliegend beschriebenen (Monitoring-)Systems erleichtert werden, mag jedoch auch unabhängig davon für eine jeweilige Fertigungslinie implementiert sein. Anders ausgedrückt: Im Wesentlichen ist es Ziel des hier beschriebenen (Monitoring-)Systems, das Verhalten und die Maßnahmen von Fachkräften im Zusammenhang mit einem Stopp bzw. einem vordefinierten Ereignis zu analysieren und daraus eine Handlungsempfehlung oder -aufforderung zu generieren, basierend auf welcher die Fehlerbehebung erleichtert werden kann, möglichst spezifisch nach Art/Typ des jeweils erfassten Stopps bzw. Ereignisses, sei es unmittelbar in der jeweiligen Fehlerbehebungssituation (zumindest annähernd in Echtzeit), sei es in der Art von aufbereiteten Schulungsunterlagen für ein zeitlich nachgelagertes Training der involvierten Fachkraft oder weiterer Fachkräfte. Insoweit mag das hier beschriebene System auch in Kommunikation mit die Funktionsweise des Fertigungsprozesses überwachender Sensorik stehen, dies jedoch im Wesentlichen vor dem Ziel, dem hier beschriebenen System den Stopp-Zeitpunkt und gegebenenfalls auch die Art des Stopps zu signalisieren. Wahlweise steht das hier beschriebene System direkt in Kommunikation mit einem (zentralen) Steuerungs-/Regelungssystem bzw. einer entsprechenden Steuerungs-/Regelungseinrichtung der Fertigungslinie (oder des entsprechenden funktional abgegrenzten Fertigungslinienabschnitts), zum Erhalten der Information bezüglich Zeitpunkt/Art des jeweiligen Stopps bzw. Ereignisses; für diesen Fall steht das hier beschriebene System mittelbar über das Steuerungs-/Regelungssystem in Kommunikation mit die Funktionsweise des Fertigungsprozesses überwachender Sensorik.

Es ist zu verstehen, dass das hier beschriebene System bereits basierend auf der datentechnischen Erfassung mittels der hier beschriebenen Erfassungseinheiten die hier beschriebenen Maßnahmen generieren kann. Freilich kann die Implementierung noch anwendungsspezifischer und auch hinsichtlich prozessualer Abstimmung noch zielgerichteter erfolgen, wenn zusätzlich zu den mittels der Erfassungseinheiten erhobenen Daten auch Sensordaten in die Analyse einbezogen werden. Der Fachmann kann für eine jeweilige Implementierung entscheiden, ob bzw. in welchem Grade dies zweckdienlich ist zur Optimierung der gegebenenfalls fertigungslinienspezifischen Funktionsweise des hier beschriebenen Systems. Beispielsweise korreliert wenigstens ein erster Sensor der Fertigungslinie mit einer ersten Erfassungseinheit des Systems (insbesondere auch betreffend dieselbe Stelle bzw. denselben Prozess des Verarbeitungsverfahrens), und ein wenigstens zweiter Sensor der Fertigungslinie mit einer zweiten Erfassungseinheit des Systems, etc. Dies ermöglicht auch eine besonders schlanke Implementierung bei gleichzeitig maximal breiter Datengrundlage bei Koppelung des Systems mit einer/der Steuerungs-/Regelungseinrichtung bzw. einem/dem Steuerungs-/Regelungssystem der Fertigungslinie.

Als implementierte/implementierbare Sensorik lässt sich beispielhaft nennen: Sensorik zum Überwachen von Seitenausrichtern, Einzug (insbesondere zweistufiger Einzug), Neigungsverstellung von Transportbändern, und/oder (Servo-)Antriebssensorik, Bahnverstellungssensorik, Längenüberwachungssensorik, Geschwindigkeitssensorik, Druck- und Temperatursensorik.

Aus der vorliegenden Offenbarung geht hervor, dass die vorliegende Erfindung im Kontext von Prozessen steht, die ein menschliches Überwachen bzw. Eingreifen erfordern. Die Fachkräfte als menschliche Instrumente können auch auf absehbare Zeit nicht durch Robotik ersetzt werden, zumindest nicht in dem hier betrachteten Kontext, bei welchem eine variable, flexible Auftragsfertigung auch von vergleichsweise kleinen Chargen auch in Zukunft von großer Bedeutung bleibt. Anders ausgedrückt: Der Mensch wird bei den hier betrachteten Fertigungslinien weiterhin entscheidender Faktor hinsichtlich Effizienz und Qualität bleiben. Somit sind die von den involvierten Fachkräften vorgenommenen manuellen Maßnahmen während der Fertigung von großer Bedeutung, und diesbezügliche Unsicherheiten oder Fehler müssen so effektiv wie möglich vermieden werden. Die vorliegende Erfindung erleichtert dabei auch die Umsetzung des Konzeptes Erkennen, Verstehen, Anwenden, unterstützt also unmittelbar die Fachkräfte im Problem-/Fehlerbehebungsprozess.

Beispielhafte Kenngrößen für einen typischen Fertigungsprozess von Kartonagen sind: Verarbeitungsbreite im Bereich von 1500 bis 2500mm, Längsnahtklebung an drei, vier oder sechs Punkten, Maschinengeschwindigkeit im Bereich von 200 bis 300m/min, Pressdruckeinstellung einstellbar in drei Zonen, Transferstationen zwischen einzelnen funktionalen Abschnitten der Fertigungslinie.

Die vorliegende Erfindung liefert Maßnahmen und Hilfsmittel zur Realisierung insbesondere der folgenden Vorteile, insbesondere auch dank vorteilhafter Kombination von KI-Technologie und Echtzeit-Maschinenüberwachungsmaßnahmen im Kontext von fehlerbegründeten Stopps oder vergleichbaren bzw. Ereignissen, zur Verbesserung industrieller Verpackungsmaterial-Verarbeitungsprozesse insbesondere auch basierend auf gezielt für einzelne Prozesse der Fertigungslinie implementierter Kamera-Technologie mit KI-gestützter (Bild-)Datenauswertung:
- Reduzierung von Maschinenstillstandszeiten, insbesondere dank präziser Analyse und Lösungsanleitung;
- automatische Erstellung von Schulungs- und Optimierungsmaterialien insbesondere im Kontext von fehlerbegründeten Stopps, insbesondere unter Berücksichtigung des Verhaltens von Fachkräften;
- effiziente Nutzung von KI-Werkzeugen bzw. maschinellem Lernen bei Auswertung von Bild-/Videomaterial und beim Generieren von Handlungsempfehlungen, insbesondere zur Unterstützung von Fachkräften bzw. Bedienpersonal und zur Maximierung der Maschinenleistung;
- ergonomische Benutzer- bzw. Bedienerführung für besonders zeiteffizienten schnellen Zugang zu relevanten Informationen und Anleitungen einerseits und/oder zu den Fehlerquellen selbst, an der Fertigungslinie, andererseits;

Die vorliegende Erfindung erleichtert demnach auch ein besonders zielgerichtetes Bewusstmachen von Fehlern, Fehlerquellen bzw. Fehlerursachen in unmittelbarem zeitlichen Zusammenhang mit (Maschinen-)Stopps bzw. vergleichbaren bzw. Ereignissen, und ermöglicht auch eine Kategorisierung der Fehler (bzw. Ursachen), wodurch auch die Fehlerbehebung erleichtert bzw. effizienter/effektiver ausgestaltet werden kann. Zudem kann eine jeweilige Fachkraft mehr oder weniger in Echtzeit angeleitet werden, basierend auf systemseitig generierten Handlungsempfehlungen.

Beispielsweise kann die Implementierung von KI-Modellen auch dahingehend erfolgen, dass systemseitig erfasst wird, ob eine Fachkraft sich in der richtigen Richtung bewegt (insbesondere auf dem Weg zur Fehlerquelle) und/oder die richtigen Bewegungen durchführt (insbesondere im Bereich der Fehlerquelle zwecks Fehlerbehebung insbesondere durch Handhabung von Werkstücken bzw. Verpackungsmaterial), insbesondere zwecks zielgerichteter Fehlerbehebung.

Vorteilhaft werden systemseitig generierte Lösungsvorschläge zumindest an einem Bediener-Terminal der jeweiligen Fertigungslinie visualisiert. Bevorzugt sind entlang einer jeweiligen Fertigungslinie wenigstens zwei oder drei Visualisierungsstellen implementiert, jeweils vorteilhaft ausgestattet mit wenigstens einer Anzeigeeinheit. Der Fachmann kann ausgehend von der vorliegenden Offenbarung eine jeweilige Visualisierungsstelle bzw. Anzeigeeinheit auch mit einer Eingabefunktion bzw. Benutzerinteraktions-Schnittstelle ausstatten, wobei damit einher gehende Vorteile stark in Abhängigkeit von der Art und Ausdehnung der jeweiligen Fertigungslinie abhängig sein mögen. Die Visualisierung kann dabei wahlweise durch zwei- oder dreidimensionale Veranschaulichung bzw. Wiedergabe erfolgen (Vorgang des Ausgebens).

Dabei kann die Mehrzahl von optischen Erfassungseinheiten das Erheben einer Datengrundlage sicherstellen, mittels welcher eine vorteilhaft KI-gestützte Auswertung von (Relativ-)Bewegungen erfolgen kann, in der Art einer Situationsanalyse basierend auf Relativbewegungen insbesondere von Fachkräften bzw. Bedienpersonal, vor dem Zweck, eine Datengrundlage für eine Wiedergabe von Bild-/Videodaten und daraus erstellten Handlungsempfehlungen zu schaffen, basierend auf welchen eine vornehmlich visuelle Assistenz bei der Fehlerbehebung sichergestellt werden kann (simultan zur Fehlerbehebung und/oder als Schulungs-/Trainingsunterlage). Auch kann ein Einbezug von Bewegungsdaten betreffend das Verpackungsmaterial als solches und/oder betreffend Maschinenkomponenten (z.B. Stellglieder, Seitenausrichter oder dergleichen) erfolgen, was jedoch zur Implementierung des hier beschriebenen (Monitoring-)Systems nicht notwendigerweise erforderlich ist. Letzterer Typ von Bewegungsdaten kann auch durch die Fertigungslinie selbst bzw. durch ein/deren Steuerungssystem erfasst bzw. bereitgestellt werden.

Bei vergleichsweise komplexen Fertigungslinien können sich wenigstens sieben oder acht Kontrollstellen bezüglich potentieller Fehlerquellen als sinnvoll für die Implementierung des hier beschriebenen (Monitoring-)Systems erweisen, es können jedoch auch noch weitaus mehr Kontrollstellen sein, oder auch deutlich weniger Kontrollstellen. Eine Kontrollstelle ist dabei nicht notwendigerweise als Visualisierungsstelle ausgestaltet, bzw. vice versa.

Somit liefert die vorliegende Erfindung ein System und Verfahren für die Überwachung und Optimierung von insbesondere Maschinen in industriellen Anwendungen zum Verarbeiten von Verpackungsmaterial, wobei Kamera-Technologie vorteilhaft mit KI-gestützter Analyse kombiniert werden kann, insbesondere auch um die Effizienz und Leistung von Mensch-Maschine-Interaktionen zu verbessern. Insbesondere kann implementiert sein/werden:
- Identifizieren und Analysieren von Maschinenstopps, Ermitteln von Fehlerursachen für die jeweilige Unterbrechung, insbesondere auch unter Einbindung von KI-Modellen (KI-gestützte Stoppanalyse und Performancebewertung);
- Live-Überwachung und Videoanalyse, insbesondere an kritischen Positionen der jeweilige Maschine/Fertigungslinie, insbesondere zum Bereitstellen von Live-Streams;
- Einsehen von Echtzeit-Videos insbesondere über eine mobile Applikation, über ein Bediener-Terminal und/oder über eine Admin-Plattform;
- Erstellen von Schulungs- und Prozessoptimierungsvideos;
- Möglichkeit des Signalisieren durch Nutzereingabe bzw. Knopfdruck, dass Videodaten zu einem Maschinen-Rüstvorgang (bzw. Bestückung, Einfahren) aufgenommen werden sollen;
- systemseitige automatische Erstellung von Schulungsvideos aus vorteilhaften Kameraperspektiven, wobei die Schulungsvideos beispielsweise zum Training von Fachkräften für zukünftige Aufträge genutzt werden können;
- automatische Erstellung eines videodatenbasierten Leitfadens für ähnliche zukünftige Aufträge bzw. Prozesse, insbesondere nach Erreichen einer gewünschten Maschinenleistung (Output-Schwellwert);
- Ausgabe von Handlungsempfehlungen (Lernmaterial und/oder spezifische Fehlerbehebungs-Anweisungen) an vorteilhaften Positionen der Fertigungslinie, insbesondere auch direkt am/an einem Terminal;
- näherungs- bzw. positionsabhängige Ausgabe von relevanten Videos bzw. Videodaten und von Anleitungen bzw. Handlungsempfehlungen und/oder Handlungsaufforderungen im Kontext eines jeweiligen aufgetretenen Stopps, insbesondere sobald sich eine Fachkraft bzw. ein Bediener einem/dem Terminal nähert (das Terminal kann mit wenigstens einem Näherungssensor ausgestattet sein), wodurch die Reaktionszeit bei der Fehlerbehebung weiter reduziert wird und eine besonders effiziente Problembehebung bzw. Reaktivierung eines Produktionsprozesses sichergestellt werden kann;

Im Folgenden wird bei Bezugnahmen auf Stopps synonym auch auf vergleichbare Ereignisse Bezug genommen, die jeweils fertigungslinienspezifisch als Trigger implementiert sein können, z.B. das Überschreiten eines Schwellwerts einer Lagetoleranz und/oder einer bildlichen Abweichung (z.B. KI-gestützte Auswertung von Bildinformationen bezüglich der Soll-/Ist-Beschaffenheit einer Kartonage).

Gemäß einem Ausführungsbeispiel ist das System eingerichtet, in Reaktion auf einen Stopp die zuletzt erfassten Daten betreffend zumindest den Bewegungspfad bzw. die zeitlich vordefinierbare Sequenz des Bewegungspfads vor/nach dem Stopp abzuspeichern und mit wenigstens einem Typ Stopp zu korrelieren und eine Handlungsaufforderung in Form von wenigstens einer Fehlerbehebungsmaßnahme zu generieren und an wenigstens einer visuellen und/oder akustischen Anzeigeeinheit des Systems auszugeben, insbesondere binnen spätestens fünf bis zehn Sekunden nach erfolgtem Stopp, vorteilhaft mit der visuellen und/oder akustischen Ausgabe örtlich vorgegeben im Bereich wenigstens eines betroffenen Fertigungslinienabschnitts. Dies begünstigt auch eine besonders zielführende systemseitige Unterstützung hinsichtlich besonders effizienter zumindest teilweise manueller Fehlerbehebung.

Vorteilhaft umfasst das System oder zumindest die Fertigungslinie als solche wenigstens zwei oder drei örtlich verteilt entlang der Fertigungslinie angeordnete Anzeigeeinheiten. Dies begünstigt auch ein noch leichteres Erkennen von Stelle und Art des Fehlers durch die jeweilige Fachkraft.

Gemäß einem Ausführungsbeispiel ist/wird die zeitlich vordefinierbare Sequenz des Bewegungspfads auf ein Zeitfenster von mindestens drei Sekunden vor dem Stopp und/oder mindestens fünf Sekunden nach dem Stopp definiert. Dies ermöglicht einerseits eine leichtere Auffassung der zum Fehler führenden Randbedingungen, andererseits kann die Analyse der Situation und der Art und Weise der Fehlersuche bzw. der Art und Weise der Umsetzung einer Fehlerbehebungsmaßnahme auf den besonders wichtigen zeitlichen Abschnitt direkt nach Entstehung des Fehlers fokussiert werden.

Freilich kann das Zeitfenster nach hinten verlängert werden, z.B. dann wenn die Handlungsempfehlung auch im Kontext von konkreten Fehlerbehebungsmaßnahmen stehen soll oder letztere erläutern soll z.B. anhand von beispielhafter Bezugnahme auf vergleichbare zuvor bereits behobene Fehler.

Gemäß einem Ausführungsbeispiel ist das System eingerichtet, das Ausgeben basierend auf einem Zeitraffer zu realisieren, insbesondere indem die in Reaktion auf einen Stopp zuletzt erfassten Daten betreffend zumindest den Bewegungspfad bzw. die entsprechend zeitlich vordefinierte Sequenz des Bewegungspfads als Video in mindestens um den Faktor zwei reduzierter Ablauf-Geschwindigkeit ausgegeben werden, insbesondere an wenigstens einer der Anzeigeeinheiten. Dies erleichtert nicht zuletzt auch das Erkennen von Fehlerursachen durch Fachkräfte bzw. Bedienpersonen sowie das Verständnis hinsichtlich möglicher oder tatsächlicher Fehlerquellen. Ein solcher Zeitraffer kann hier auch als Slow Motion-Einstellung beschrieben werden, beispielsweise indem ein Zeitfenster von drei bis zehn Sekunden auf bis zu einer Minute Dauer wiedergegeben wird.

Gemäß einem Ausführungsbeispiel ist das System eingerichtet, das Generieren der wenigstens einen Handlungsempfehlung zumindest teilweise basierend auf im Datenspeicher hinterlegten Daten durchzuführen, insbesondere nach erfolgtem Korrelieren, beispielsweise unter Bezugnahme auf Videodaten zu bereits erfolgreich vollzogenen Fehlerbehebungsmaßnahmen in der Vergangenheit an derselben Fertigungslinie oder an einer gleichen oder ähnlichen Fertigungslinie, insbesondere bei einer vergleichbaren Charge von Verpackungsmaterial. Eine derartiger Informationsbeschaffung aus Datenbeständen kann auch eine besonders schnelle Fehlerbehebung begünstigen, insbesondere indem systemseitig nach gespeicherten Handlungsempfehlungen oder Videodaten zu vergleichbaren Fehlersituationen recherchiert wird, insbesondere unmittelbar in Reaktion auf den Stopp.

Die unterschiedlichen Typen von Stopps können dabei auch in einer Datenbank des hier beschriebenen Systems und/oder einer Speicherkomponente einer/der jeweiligen Fertigungslinie selbst und/oder auf einem zentral zugänglichen Server oder auch in einem speziell dafür vorgesehenen Bereich des Datenspeichers des hier beschriebenen abgelegt sein, insbesondere in der Art einer Fehlerbibliothek, basierend auf welcher die potentiell möglichen Fehlerursachen leichter erkannt und die zu generierenden Handlungsempfehlungen gezielter erstellt werden können. Die einzelnen Fehlerursachen können dabei z.B. über eine Mehrzahl von Fehlermerkmalen charakterisiert sein/werden, insbesondere spezifisch unter Bezugnahme auf eine bestimmte Fertigungslinie und/oder eine bestimmte Verpackungsmaterial-Charge (z.B. einem bestimmten Typ von Faltschachtel aus Kartonagen).

Gemäß einem Ausführungsbeispiel ist/wird wobei wenigstens ein spezifischer Typ Stopp mit wenigstens einem Fehlermerkmal korreliert, insbesondere wenigstens einem Fehlermerkmal aus der folgenden Gruppe: Fehlerposition, Fehlerzeitpunkt, Chargen-Identifikationsmerkmal, Fertigungslinien-Identifikationsmerkmal, funktionaler Bearbeitungsschritt (z.B. Zufuhr, Kleben, Schneiden, Bedrucken, Falten, Transferieren, Ausrichten, oder dergleichen), räumliche Ausrichtung des Werkstücks, gegebenenfalls Packungs- oder Überlappungszustand des Werkstücks mit anderen Werkstücken; insbesondere spezifisch unter Bezugnahme auf eine bestimmte Fertigungslinie und/oder eine bestimmte Verpackungsmaterial-Charge. Dies erleichtert nicht zuletzt auch ein besonders systematisches Vorgehen insbesondere im Sinne eines iterativen kontinuierlichen Verbesserungsprozesses, bei welchem bei erneutem artverwandtem Fehler die bisherigen empfohlenen oder vorgenommenen Maßnahmen ausgewertet und bei der neuen Handlungsaufforderung berücksichtigt werden. Das Korrelieren von Stopps mit Fehlermerkmalen kann seitens des hier beschriebenen Systems implementiert sein, kann jedoch wahlweise auch ergänzend oder alternativ fertigungsliniensystemseitig implementiert sein, wobei die Fehlerkorrelation wahlweise auch bereits fertigungsliniensystemseitig bereitgestellt sein/werden kann, so dass das hier beschriebene System darauf basierend das Generieren der Handlungsempfehlung/-aufforderung besorgen kann.

Es ist zu verstehen, dass das hier beschriebene System mit selbstlernender Fähigkeit ausgestattet sein kann (insbesondere mit wenigstens einem ML-Algorithmus bzw. Algorithmus maschinellen Lernens), und insbesondere in Hinblick auf bisherige empfohlene und/oder tatsächlich vorgenommene Maßnahmen trainierbar ist; insoweit kann das hier beschriebene System bzw. Verfahren also auch in wenigstens einem Schritt im Nachgang zur generierten Handlungsempfehlung/-aufforderung einen nachgelagerten Schritt umfassen, in welchem ein Erfassen und Auswerten von tatsächlichen im Feld vorgenommener Fehlerbehebungsmaßnahmen der jeweils involvierten Fachkraft erfolgt (insbesondere manueller Fehlerbehebungsmaßnahmen durch Fachkräfte), insbesondere unter Einbezug von künstlicher Intelligenz. Auf diese Weise können zu generierende Handlungsempfehlung/-aufforderung auch iterativ angeglichen werden, im Sinne selbstlernender Optimierung, z.B. in der hier beschriebenen Datenbank, insbesondere in Abhängigkeit von erfolgreichen nutzerseitigen Maßnahmen. Insoweit mag das hier beschriebene System auch als dynamisches System zum Generieren von Handlungsempfehlungen/-aufforderungen zur Fehlerbehebung bezeichnet werden.

Das Erfassen und Auswerten von tatsächlichen im Feld vorgenommener Fehlerbehebungsmaßnahmen kann dabei auch im Kontext einer weiterführenden Mensch-Maschine-Interaktion während der jeweiligen Fehlerbehebungsmaßnahme implementiert sein/werden, insbesondere KI-gestützt.

Gemäß einem Ausführungsbeispiel ist das System eingerichtet, das Erfassen der Daten nach Erreichen einer vordefinierbaren Soll-Maschinenleistung oder Soll-Fertigungslinienleistung durchzuführen, insbesondere auf kontinuierliche Weise, indem lediglich ein vordefinierbares zurückliegendes Zeitfenster der erfassten Daten temporär zwischengespeichert wird und lediglich im Falle eines Stopps abgespeichert bzw. im Datenspeicher dauerhaft hinterlegt wird (und ansonsten überschrieben wird). Durch Bezugnahme auf die momentane Leistung (z.B. auf einen Schwellwert für einen Outputparameter) kann insbesondere auch eine Korrelation im Kontext einer Verarbeitungsgeschwindigkeit erfolgen, so dass auch ausgewertet werden kann, ob bestimmte Fehler nur in einem bestimmten Bereich des Outputs oder erst ab einem gewissen eher hohen Output auftreten. Dies erleichtert auch das Einstellen eines möglichst hohen Outputs, ohne das Fehlerrisiko zu sehr erhöhen zu müssen (was für eine jeweilige Charge gegebenenfalls auftragsbezogen jeweils individuell neu austariert werden muss). Auch kann das Erfassen in Abhängigkeit vom Verlassen eines vordefinierbaren Bereichs für die Soll-Leistung erfolgen bzw. initiiert werden, insbesondere zwecks Analyse von Ursachen für Schwankungen der Maschinenleistung.

Gemäß einem Ausführungsbeispiel ist das System eingerichtet, zumindest das Erfassen und stoppabhängig auch ein/das Korrelieren basierend auf wenigstens einem Leistungs-/Outputparameter betreffend den Bearbeitungsprozess der jeweiligen Fertigungslinie durchzuführen, insbesondere in Abhängigkeit von einer Schwankung des wenigstens einen Leistungs-/Outputparameters, insbesondere bei Überschreiten einer vordefinierbaren Abweichung von einem Soll-Leistungs-/Outputparameter. Dies erleichtert auch eine proaktive Vorkehrung zur vorbeugenden Befassung mit potentiellen Fehlerquellen.

Gemäß einem Ausführungsbeispiel ist das System eingerichtet, zumindest das Korrelieren und/oder zumindest das Erfassen mittels wenigstens eines oder basierend auf wenigstens einem ML-Algorithmus durchzuführen, insbesondere basierend auf wenigstens einem für die hier beschriebene Fehlererkennung implementierten KI-Modell. Dies ermöglicht auch, weitere Potentiale insbesondere im Kontext der Auswertung von Videodaten zu heben. Beispielsweise ist/wird wenigstens ein ML-Algorithmus im Kontext des Schrittes des Ermittelns des Fehlertyps (insbesondere zwecks schneller/zielgerichteter Generierung einer Handlungsaufforderung) und/oder im Kontext des Schrittes des Ausgebens (insbesondere zwecks effektiven örtlichen Leitens der Fachkraft entlang der Fertigungslinie oder hin zur Fehlerstelle) implementiert.

Es ist zu verstehen, dass die Implementierung von ML-Algorithmen bzw. von KI-Modellen im Rahmen der vorliegenden Erfindung eine computertechnische Infrastruktur bzw. Datenverarbeitungs-Architektur insbesondere auch im Kern wenigstens einer/der hier beschriebenen Recheneinheit umfassen kann, welche die Ausführung von ML-Algorithmen auch zentral direkt in/auf der Hardware erleichtert, leistungsfähiger macht bzw. beschleunigt (bis hin zu Echtzeit-Verarbeitung) und/oder energieeffizienter macht oder zumindest teilweise überhaupt auch erst ermöglicht. Beispielsweise umfassen die hier beschriebenen computertechnischen und chipbasierten Mittel wenigstens eine der folgenden Komponenten: photonische KI-Chips insbesondere mit Silizium-Photonik-Strukturen (Kombination elektronischer und optischer Datenverarbeitungsprozesse), optische Wellenleiter zumindest teilweise anstelle von oder zumindest in Ergänzung zu elektronischer Halbleiter, sowie Multiplexing-Komponenten, Photonenmodulatoren, Fotodetektoren, Ringresonatoren, wenigstens eine Dense Wavelength Division Multiplexing (DWDM)-Komponente zur simultanen Abarbeitung mehrerer Datenkanäle, wenigstens einen optischen Schaltkreis integriert in wenigstens ein neuronales Netz (NN oder DNN, deep neural network), wenigstens einen photonischen Prozessor. Beispielsweise wird wenigstens ein NN und/oder DNN direkt auf Hardwareebene ausgeführt. Im Effekt können insbesondere auch besonders große Datenmengen besonders schnell analysiert werden. Beispielsweise liegt dabei wenigstens ein photonisches Bauteil in direkt auf einen Wafer gedruckter Form vor, insbesondere wenigstens eines der folgenden photonischen Bauteile: optische Verstärker, photonische Schaltungen (PICs), Polarisationswandler, Splitter, Lichtwellenleiter, Splitter, Phasenmodulatoren.

Gemäß einem Ausführungsbeispiel ist jeweils wenigstens eine optische Erfassungseinheit an jedem offen zugänglichen Fertigungslinienabschnitt mit manueller Eingriffsmöglichkeit zur manuellen Fehlerbehebung angeordnet, bevorzugt in Ausrichtung zumindest annähernd lotrecht nach unten, beispielsweise in einer Höhe von drei oder vier Metern. Dies ermöglicht nicht zuletzt auch eine ortsspezifisch individuell optimierbare Datenerfassung in den besonders relevanten Abschnitten der Fertigungslinie, insbesondere auch bei Anonymisierung hinsichtlich involvierter Nutzer bzw. Fachkräfte.

Die zuvor genannte Aufgabe wird auch gelöst durch ein Verfahren gemäß dem entsprechenden nebengeordneten Verfahrensanspruch, nämlich durch ein Verfahren zum Monitoring von wenigstens einem Typ Ereignis, insbesondere Stopp (zeitweisem Ausfall) einer offen zugänglichen Fertigungslinie für zumindest teilweise automatische, bevorzugt vollautomatische Bearbeitung von Verpackungsmaterial, insbesondere Kartonagen, zum Erkennen von den wenigstens einen Typ Ereignis, insbesondere Stopp hervorrufender Fehler/Ursachen, und zum bevorzugt fehlerspezifischen Generieren wenigstens einer visuell und/oder akustisch erfassbaren Handlungsempfehlung zur Fehlerbehebung insbesondere für wenigstens eine die Fertigungslinie bedienende/überwachende Fachkraft, wobei eine Mehrzahl von die Funktionsweise der Fertigungslinie überwachenden Sensoren und eine Mehrzahl von optischen Erfassungseinheiten in Kommunikation mit einer Recheneinheit mit Datenspeicher stehen, wobei die optischen Erfassungseinheiten mit einem Sichtfeld von oben einen entsprechenden Fertigungslinienabschnitt einsehen; wobei Daten betreffend zumindest den Bewegungspfad entlang wenigstens zweier Fertigungslinienabschnitte von wenigstens einer die Fertigungslinie betreuenden Fachkraft erfasst werden und in Reaktion auf ein Ereignis, insbesondere Stopp zumindest eine zeitlich vordefinierbare Sequenz des Bewegungspfads der Fachkraft mit wenigstens einem spezifischen Typ Ereignis/Stopp korreliert wird, zum bevorzugt fehlerspezifischen Generieren der wenigstens einen Handlungsempfehlung und zum Ausgeben wenigstens einer Handlungsaufforderung in Dateiform und/oder an wenigstens einer visuellen und/oder akustischen Anzeigeeinheit, beispielsweise einer Anzeigeeinheit des hier beschriebenen Systems; insbesondere auch bei/durch Verwendung eines zuvor weiter oben beschriebenen Systems. Hierdurch ergeben sich zuvor genannte Vorteile, insbesondere in Hinblick auf einen möglichst hohen Grad an systemseitiger automatisierter Unterstützung beim zumindest teilweise manuell durchzuführenden Fehlerbehebungsvorgang.

Beispielsweise umfasst die Handlungsempfehlung wenigstens eine Störungsmeldung, z.B. in der folgenden Art: "Die Ablage ist gestört - bitte prüfen Sie den Ablagebereich". Beispielsweise umfasst die Handlungsempfehlung wenigstens eine Fehlerinformation, z.B. in der folgenden Art: "Maschinenstopp aufgrund übermäßiger Breite des Werkstücks - bitte die Werkstücke geometrisch überprüfen und/oder neu ausrichten". Eine derartige Fehlerinformation kann auch orts-/zeitpunktbezogen sein oder wenigstens ein weiteres der hier beschriebenen Fehlermerkmale aufweisen.

Gemäß einer Ausführungsform werden in Reaktion auf einen Stopp die zuletzt erfassten Daten betreffend zumindest den Bewegungspfad oder die zeitlich vordefinierbare Sequenz des Bewegungspfads vor/nach dem Stopp gespeichert und mit wenigstens einem Typ Stopp korreliert, wobei eine Handlungsaufforderung in Form von wenigstens einer Fehlerbehebungsmaßnahme generiert wird und an wenigstens einer visuellen und/oder akustischen Anzeigeeinheit oder der entsprechenden Fertigungslinie ausgegeben wird. Die Fehlerbehebungsmaßnahme kann dabei z.B. in Form eines Videos erläutert werden, vorteilhaft auch örtlich in einem Bereich der Fertigungslinie, in welchem der Fehler auch aufgetreten ist (wahlweise auch zentral an einem Terminal). Im gleichen Zuge kann eine grafische Benutzerschnittstelle aufgerufen oder automatisch präsentiert werden, insbesondere systemseitig, z.B. dann wenn eine Nutzereingabe für eine Fehlerbehebung von Nutzen ist, z.B. betreffend eine Zurückverlagerung oder Neupositionierung einer Maschinenkomponente und/oder der Charge selbst.

Gemäß einer Ausführungsform wird die zeitlich vordefinierbare Sequenz des Bewegungspfads auf ein Zeitfenster von mindestens drei Sekunden vor dem Stopp und/oder mindestens fünf Sekunden nach dem Stopp vorgegeben, insbesondere systemseitig. Dabei kann das Zeitfenster vergleichsweise klein sein, was erleichtern kann, die Fehlersuche zu fokussieren und das Verständnis bezüglich der Fehlerentstehung zu verbessern, z.B. basierend auf einer Slow Motion-Wiedergabe.

Gemäß einer Ausführungsform wird wenigstens ein Wiedergabe-Zeitfenster für das Ausgeben der wenigstens einen Handlungsaufforderung vorgegeben, insbesondere systemseitig, insbesondere zumindest ein erstes Wiedergabe-Zeitfenster für das Ausgeben einer ersten Handlungsaufforderung und ein zweites Wiedergabe-Zeitfenster für das Ausgeben einer zweiten Handlungsaufforderung. Diese zeitliche Staffelung kann auch das Verständnis hinsichtlich wenigstens einer Fehlerbehebungsmaßnahme fördern, z.B. wenn die Fehlerbehebungsmaßnahme in mehreren Schritten zu vollziehen ist. Die Staffelung erleichtert demnach auch ein/das Anleiten einer im Feld involvierten Fachkraft.

Gemäß einer Ausführungsform wird wenigstens eine Wiedergabe-Position für das Ausgeben der wenigstens einen Handlungsaufforderung vorgegeben, insbesondere systemseitig, insbesondere zumindest eine erste Wiedergabe-Position für das Ausgeben einer/der ersten Handlungsaufforderung und eine zweite Wiedergabe-Position für das Ausgeben einer/der zweiten Handlungsaufforderung. Dies erleichtert nicht zuletzt auch die Umsetzung einer Fehlerbehebungsmaßnahme, insbesondere dann wenn eine Fehlerursache nicht nur sehr lokal zu beheben ist, sondern an mehreren Stellen entlang einer vergleichsweise langgestreckten Fertigungslinie. Die involvierte Fachkraft kann demnach auch optisch/akustisch ortsspezifisch angeleitet werden, z.B. indem zu einer ersten Fehlerbehebungsmaßnahme weiter stromauf der Fertigungslinie (insbesondere auch relativ zur momentanen Position der involvierten Fachkraft gesehen) auch durch Ausgabe der Handlungsaufforderung im entsprechenden Abschnitt der Fertigungslinie aufgefordert wird, und indem zu einer zweiten Fehlerbehebungsmaßnahme weiter stromab der Fertigungslinie auch durch Ausgabe der Handlungsaufforderung im entsprechenden weiter stromab angeordneten Abschnitt der Fertigungslinie aufgefordert wird.

Die jeweilige Wiedergabe-Position ist/wird vorteilhaft relativ in Länge und Breite und wahlweise auch in Höhe relativ zur jeweiligen Fertigungslinie definiert.

Gemäß einer Ausführungsform erfolgt das Ausgeben basierend auf einem Zeitraffer, insbesondere indem die in Reaktion auf einen Stopp zuletzt erfassten Daten betreffend zumindest den Bewegungspfad oder die entsprechend zeitlich vordefinierte Sequenz des Bewegungspfads als Video in mindestens um den Faktor zwei reduzierter Ablauf-Geschwindigkeit (hier auch als Slow Motion bezeichnet) ausgegeben werden. Dies begünstigt ein schnelles Verständnis der Fehlerursache durch die jeweils involvierte Fachkraft, wobei die entsprechend relevanteste Sequenz ausgewählt und im Zeitraffer wiedergegeben werden kann, insbesondere systemseitig.

Gemäß einer Ausführungsform erfolgt das Generieren der wenigstens einen Handlungsempfehlung zumindest teilweise basierend auf im Datenspeicher hinterlegten Daten, insbesondere nach erfolgtem Korrelieren. Dies ermöglicht auch den bevorzugt systemseitigen automatischen Einbezug von Erfahrungswerten und bereits erfolgreich durchgeführten Fehlerbehebungsmaßnahmen beim Generieren von Handlungsaufforderungen, was insbesondere im Kontext eines maschinellen Lernens von Nutzen sein mag, insbesondere zur iterativen Verbesserung von Fehlerbehebungsmaßnahmen speziell auch beim Einfahren von neuen Fertigungslinien oder ähnlichen Aufträgen bzw. vergleichbaren Verpackungsmaterial-Chargen.

Gemäß einer Ausführungsform erfolgt das Erfassen der Daten nach Erreichen einer vordefinierbaren Soll-Maschinenleistung oder Soll-Fertigungslinienleistung, insbesondere auf kontinuierliche Weise, indem lediglich ein vordefinierbares zurückliegendes Zeitfenster der erfassten Daten temporär zwischengespeichert wird und lediglich im Falle eines Stopps abgespeichert oder im Datenspeicher dauerhaft hinterlegt wird. Dies ermöglicht auch, den Bearbeitungsprozess kontinuierlich auf einen Output hochzufahren, welcher noch einen guten Kompromiss aus Effizienz und Fehlerrisiko zulässt.

Gemäß einer Ausführungsform umfasst das Generieren der wenigstens einen Handlungsempfehlung das Generieren einer Fehlerbeschreibung. Dies erleichtert nicht zuletzt auch die Einordnung der Fehlersituation durch die jeweilige Fachkraft und verbessert auch die Verständlichkeit von Handlungsempfehlungen/-aufforderungen zu Fehlerbehebungsmaßnahmen. Anders ausgedrückt: Die fehlerspezifische Korrelation von Maschinenstopp und Fehler, bevorzugt systemseitig implementiert, umfasst noch nicht notwendigerweise eine durch menschliche Individuen lesbare/erfassbare Fehlerbeschreibung, insbesondere da letztere auch von der Art der Ursache abhängig sein kann. Gemäß einer Ausführungsform erfolgt zumindest das Erfassen und situationsbedingt (stoppabhängig) gegebenenfalls auch ein/das Korrelieren basierend auf wenigstens einem Leistungs-/Outputparameter, insbesondere in Abhängigkeit von einer Schwankung des wenigstens einen Leistungs-/Outputparameters, insbesondere bei Überschreiten einer vordefinierbaren Abweichung von einem Soll-Leistungs-/Outputparameter. Dies ermöglicht auch eine gezielte Analyse insbesondere in Phasen, in welchen die Fertigungslinie bzw. der Prozess von einem Soll-Output abweicht. Der wenigstens eine Leistungs-/Outputparameter kann dabei z.B. an wenigstens einen Motor bzw. Antrieb bzw. dessen momentane Leistungsaufnahme gekoppelt sein.

Gemäß einer Ausführungsform erfolgt zumindest das Korrelieren mittels wenigstens eines oder basierend auf wenigstens einem ML-Algorithmus, insbesondere basierend auf wenigstens einem für die hier beschriebene stoppabhängige Fehlererkennung implementierten KI-Modell, insbesondere indem das entsprechende KI-Modell für einen/den jeweiligen zu überwachenden Vorgang trainiert wird/wurde, sei es im Feld, sei es durch fertigungslinienspezifische Implementierungen. Dies begünstigt auch einen systemseitigen Trainingseffekt insbesondere bei sich wiederholender Fehlerursache, insbesondere im Rahmen des Einfahrens neu aufgebauter Fertigungslinien oder neu implementierter Verpackungsmaterial-Chargen. Das KI-gestützte Generieren von Handlungsempfehlungen insbesondere im Kontext mit KI-gestützter Auswahl und Präsentation/Ausgeben von für die spezifische Fehlererkennung und -behebung relevanten Videodaten kann eine große Effizienzsteigerung ermöglichen und erleichtert nicht zuletzt auch eine besonders zielführende und ergonomische Arbeitsweise von Fachkräften bei mehrstündiger Betreuung von auf hohen Taktzahlen arbeitenden Fertigungslinien. Beispielsweise ist/wird wenigstens ein ML-Algorithmus im Kontext des Schrittes des Ermittelns des Fehlertyps und/oder im Kontext des Schrittes des Generierens (wahlweise umfassend ein systemseitiges Auswählen der relevanten Passagen einer Videosequenz) und/oder im Kontext des Schrittes des Ausgebens implementiert.

Gemäß einer Ausführungsform erfolgt zumindest das Erfassen mittels wenigstens eines oder basierend auf wenigstens einem ML-Algorithmus, insbesondere basierend auf wenigstens einem für das Erkennen einer Bewegung einer Fachkraft implementierten KI-Modell, insbesondere für das Auswerten einer/der momentanen Bewegung einer Fachkraft im Kontext einer fehlerspezifischen Handlungsempfehlung/-aufforderung. Dies ermöglicht auch eine besonders zielführende systemseitige Unterstützung der involvierten Fachkraft bei der manuellen Fehlersuche und Fehlerbehebung, zumindest annähernd in Echtzeit. Anders ausgedrückt: Die Mehrzahl von optischen Erfassungseinheiten können derart zur Videodatenerfassung betrieben werden, dass ausgewertet werden kann, ob eine Fachkraft in einer jeweiligen momentanen Fehlerbehebungssituation korrekt agiert, und falls nein, können systemseitig entsprechende Warnhinweise oder Verbesserungsvorschläge generiert werden, insbesondere im Sinne eines örtlichen Leitens (z.B. durch lokale akustische/visuelle Anzeige) und/oder fachlichen Anleitens der Fachkraft, zwecks möglichst effizienter und sicherer manueller Fehlerbehebung. Der wenigstens eine ML-Algorithmus kann dabei die situationsspezifische Auswertung von Handlungen einer involvierten Fachkraft erleichtern bzw. überhaupt erst ermöglichen in der gewünschten bzw. Erforderlichen Effizienz und Genauigkeit.

Es ist zu verstehen, dass auch das Generieren und/oder das Ausgeben mittels wenigstens eines oder basierend auf wenigstens einem ML-Algorithmus erfolgen kann, insbesondere in Abhängigkeit von einem spezifischen Nutzerverhalten, beispielsweise in Abhängigkeit von momentanen Bewegungen oder Bewegungsmustern einer involvierten Fachkraft. Auf diese Weise kann systemseitig noch situationsspezifischer eine fehlerspezifische Handlungsempfehlung abgegeben werden, insbesondere zumindest annähernd in Echtzeit, z.B. mit einer Verzögerung nur im Millisekunden- oder maximal einstelligen Sekundenbereich, je nachdem, welche Reaktionsschnelligkeit sich technisch umsetzen lässt. Im Kontext mit dem jeweiligen Schritt des hier beschriebenen Monitorings (insbesondere Erfassen, Korrelieren, Generieren, Ausgeben) kann jeweils auch ein spezifisches KI-Modell implementiert sein/werden, je nach anwendungsspezifischer Anforderung.

Die hier beschriebene Implementierung wenigstens eines ML-Algorithmus kann somit wenigstens einen der folgenden technischen Effekte sicherstellen: systemseitige Identifizierung/Auswahl des relevanten zeitlichen Abschnitts und/oder Bildausschnitts einer Videosequenz; Erkennung von Bewegungsmustern einer Fachkraft und unmittelbare systemseitige Ausgabe von HandlungsAnleitungen zur Vermeidung von Fehlbedienungen oder nicht zielführenden Fehlerbehebungsversuchen der involvierten Fachkraft; systemseitiger Abgleich mit Datenbank in Hinblick auf die Klassifizierung eines Stopps bzw. Fehlers als vorbekannt (mit in der Konsequenz entsprechend bereits vorgegebenen Handlungsanleitungen für die Fachkraft) oder als neuartiger Fehler und/oder als neuartiger Fehlerbehebungsversuch der involvierten Fachkraft (mit daraus hervorgehendem Erfordernis des Generierens einer neuen Handlungsempfehlung für diese spezifische Fehlersituation); (zeit-)effiziente Art und Weise der Nutzung von verfügbaren Ressourcen bei der Datenerfassung und -auswertung in vergleichsweise komplexem Zusammenhang insbesondere in Abhängigkeit von einem momentanen Nutzerverhalten insbesondere simultan zur Auswertung einer Mehrzahl von Parametern bzw. (Video-)Daten.

Die zuvor genannte Aufgabe wird auch gelöst durch ein Computerprogrammprodukt umfassend Befehle, die bei Ausführung des Computerprogrammproduktes auf einem Computer diesen dazu veranlassen, Schritte zum Steuern/Regeln eines Verfahrens gemäß der vorliegenden Offenbarung auf dem Computer auszuführen, insbesondere Computerprogrammprodukt eingerichtet zum Vorgeben der Art und Weise eines Ausgebens wenigstens einer Handlungsempfehlung beim Monitoring von wenigstens einem Typ Ereignis, insbesondere Stopp einer offen zugänglichen Fertigungslinie für zumindest teilweise automatische Bearbeitung von Verpackungsmaterial, insbesondere eingerichtet zum Vorgeben der Art und Weise eines Erfassens von körperlichen Bewegungen wenigstens einer Fachkraft und zum Vorgeben von Zeitpunkten und/oder Positionen beim Generieren und Ausgeben wenigstens einer Handlungsempfehlung zur Fehlerbehebung insbesondere in Reaktion auf einen und in zeitlichem Zusammenhang mit einem/dem Ereignis, insbesondere Stopp. Dies ermöglicht basierend auf den zuvor genannten Vorteilen auch eine fertigungslinienspezifische oder prozessspezifische oder chargenspezifische Implementierung auf einfache Weise, beispielsweise auch eine nutzerspezifische Anpassung der Art und Weise des Vorgebens/Ausgebens, z.B. über eine grafische Benutzerschnittstelle, beispielsweise bereitgestellt über eine Applikation auf einem Endgerät.

Die zuvor genannte Aufgabe wird auch gelöst durch Verwendung eines in Kommunikation mit einer Mehrzahl von die Funktionsweise einer offen zugänglichen Verpackungsmaterial-Fertigungslinie überwachenden Sensoren und mit einer Mehrzahl von optischen Erfassungseinheiten stehenden Systems mit Recheneinheit und Datenspeicher und Kommunikationsmodul zum Monitoring von wenigstens einem Typ Ereignis, insbesondere Stopp der Fertigungslinie, zum Erkennen von den wenigstens einen Typ Ereignis/Stopp hervorrufender Fehler/Ursachen, und zum Generieren wenigstens einer visuell und/oder akustisch erfassbaren Handlungsempfehlung zur Fehlerbehebung für wenigstens eine die Fertigungslinie betreuende Fachkraft, wobei die optischen Erfassungseinheiten einen entsprechenden Fertigungslinienabschnitt einsehend entlang der Fertigungslinie angeordnet sind/werden, wobei Daten betreffend zumindest den Bewegungspfad entlang wenigstens zweier Fertigungslinienabschnitte von wenigstens einer Fachkraft erfasst werden, wobei in Reaktion auf einen Stopp zumindest eine zeitlich vordefinierbare Sequenz des Bewegungspfads der entsprechenden Fachkraft, insbesondere ein Verlauf über mehrere Sekunden unmittelbar nach dem Stopp, mit wenigstens einem spezifischen Typ Ereignis/Stopp korreliert wird, zum Generieren der wenigstens einen Handlungsempfehlung und zum Ausgeben wenigstens einer Handlungsaufforderung; insbesondere bei einem Verfahren gemäß der vorliegenden Offenbarung, insbesondere bei Nutzung eines Systems gemäß der vorliegenden Offenbarung. Hierdurch lassen sich zuvor genannte Vorteile realisieren, insbesondere auch in Hinblick auf eine zusätzliche Ausstattung bereits bestehender Fertigungslinien mit dem hier beschriebenen System.

Die zuvor genannte Aufgabe wird auch gelöst durch Verwendung eines Computerprogrammprodukts zum Vorgeben der Art und Weise des Erfassens und Auswertens von (Video-)Daten betreffend Bearbeitungsprozesse einer Fertigungslinie zur Bearbeitung von Verpackungsmaterial, insbesondere eines Computerprogrammprodukts gemäß der vorliegenden Offenbarung, und zum Implementieren einer Fehleranalyse- und Fehlerbehebungsanleitungs-Funktionalität in Abstimmung mit einem zentralen Steuerungs-/Regelungssystem der oder für die Fertigungslinie in Reaktion auf einen Stopp der Fertigungslinie, und zum Ausgeben wenigstens einer Handlungsaufforderung zur Fehlerbehebung, wobei das Ausgeben ferner zumindest ein Ausgeben eines Videos betreffend ein Zeitfenster von wenigen Sekunden vor dem Stopp bis wenige Sekunden nach dem Stopp bzw. Ereignis umfasst, insbesondere eines Videos sowohl umfassend Bilddaten betreffend den Verlauf der Entstehung der Fehlerursache oder den zeitlichen Verlauf der maschinellen Bearbeitung an der Fehlerstelle als auch umfassend Bilddaten betreffend den Bewegungspfad oder eine/die zeitlich vordefinierbare Sequenz des Bewegungspfads der entsprechenden Fachkraft insbesondere unmittelbar nach dem Ereignis, insbesondere Stopp. Hierdurch lassen sich zuvor genannte Vorteile realisieren, insbesondere auch in Hinblick auf ein Nachrüsten der hier beschriebenen Funktionen bzw. des hier beschriebenen Systems in bereits konzipierten, installierten und/oder in Betrieb genommenen Fertigungslinien, im Sinne einer Nachrüst-Option in Kommunikation mit der jeweiligen zentralen Steuerungs-/Regelungssystem der Fertigungslinie oder für die Fertigungslinie. Als "wenige Sekunden" ist dabei bevorzugt ein Zeitfenster im einstelligen Sekundenbereich zu verstehen, also z.B. drei oder fünf Sekunden vor/nach dem auszuwertenden Ereignis auf der Fertigungslinie (insbesondere Stopp-Zeitpunkt bzw. Fehlerursache).

Zusammenfassung: Bei automatisierten Prozessen zum Be-/Verarbeiten von Verpackungsmaterial kann es vergleichsweise häufig zu Fehlern und damit einhergehenden Stopps einer Fertigungslinie bzw. eines entsprechenden Bearbeitungsstopps kommen, mit dem Nachteil eines zeitweisen Ausfalls der Arbeitsabläufe und damit auch des Outputs. Beispielsweise bei Kartonagen, welche in vergleichsweise kleinen Chargen kundenspezifisch bearbeitet werden müssen, gibt es vergleichsweise viele Parameter und Einstellmöglichkeiten, die im Zusammenhang mit potentiellen Fehlerquellen stehen, insbesondere dann, wenn der Prozess nur für eine vergleichsweise kurze Dauer einfahren werden muss oder wenn für die jeweilige Charge auf nur wenig chargenspezifische Expertise zurückgegriffen werden kann. Die involvierten Fachkräfte müssen daher versuchen, einen Stopp des Bearbeitungsprozesses so schnell wie möglich zu beheben, was insbesondere bei langgestreckten Fertigungslinien und mehrstufigen funktional voneinander abgegrenzten Prozessschritten nicht trivial ist. Erfindungsgemäß wird ein System zum Monitoring von wenigstens einem Typ Ereignis, insbesondere Stopp einer offenen Fertigungslinie für zumindest teilweise automatische Bearbeitung von Verpackungsmaterial bereitgestellt, zum Erkennen von den wenigstens einen Typ Ereignis/Stopp hervorrufender Fehler oder Ursachen, und zum Generieren wenigstens einer Handlungsempfehlung zur Fehlerbehebung für wenigstens eine die Fertigungslinie bedienende Fachkraft, wobei das System eine Recheneinheit mit Datenspeicher aufweist, die in Kommunikation mit einer Mehrzahl von die Funktionsweise der Fertigungslinie überwachenden Sensoren und einer Mehrzahl von optischen Erfassungseinheiten steht, von denen jeweils wenigstens eine am entsprechenden Fertigungslinienabschnitt mit einem Sichtfeld von oben angeordnet ist; wobei das System eingerichtet ist, Daten betreffend zumindest den Bewegungspfad entlang wenigstens zweier Fertigungslinienabschnitte von wenigstens einer die Fertigungslinie betreuenden Fachkraft zu erfassen und in Reaktion auf ein/das Ereignis, insbesondere Stopp zumindest eine zeitlich vordefinierbare Sequenz des Bewegungspfads der Fachkraft mit wenigstens einem spezifischen Typ Ereignis/Stopp zu korrelieren, zum bevorzugt fehlerspezifischen Generieren der wenigstens einen Handlungsempfehlung und zum Ausgeben wenigstens einer Handlungsaufforderung, z.B. in Dateiform, bevorzugt in Videodateiform, und/oder an wenigstens einer visuellen und/oder akustischen Anzeigeeinheit des Systems. Hierdurch können die Fachkräfte entweder im Feld nahezu in Echtzeit instruiert werden, zur besonders effizienten Fehlerbehebung, und/oder es kann eine Schulungsunterlage oder ein Training für Fachkräfte vor oder nach oder im Zusammenhang mit dem Einfahren einer Fertigungslinie bereitgestellt werden. Die Erfindung betrifft gleichermaßen ein entsprechendes Verfahren zum Monitoring eines Ereignisses/Stopps, zum Erkennen von (Fehler-)Ursachen, und zum Generieren wenigstens einer Handlungsempfehlung bzw. -aufforderung.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
**Figuren 1A, 1B** in einer Draufsicht und in einer Seitenansicht ein an einer Fertigungslinie implementiertes System gemäß einem Ausführungsbeispiel;
**Figuren 2A, 2B, 2C, 2D, 2E, 2F** in einer perspektivischen Seitenansicht und in mehreren perspektivischen Detailansichten ein an einer Fertigungslinie implementiertes System gemäß einem Ausführungsbeispiel;
**Figuren 3A, 3B, 3C, 3D, 3E, 3F** wiederum in einer perspektivischen Seitenansicht und in mehreren perspektivischen Detailansichten, jedoch aus anderer Perspektive als in Figur 2, ein an einer Fertigungslinie implementiertes System gemäß einem Ausführungsbeispiel;
**Figuren 4A**, **4B**, **4C**, **4D**, **4E**, **4F** gemäß den Perspektiven aus Figur 3 das Sichtfeld einer/der jeweiligen Erfassungseinheit eines Systems gemäß Ausführungsbeispielen, wobei die Fertigungslinie selbst nur noch ganz leicht schemenhaft angedeutet ist, zwecks besserer Sichtbarkeit bzw. Erkennbarkeit der Sichtfelder der einzelnen Erfassungseinheiten;
**Figuren 5A, 5B** jeweils in perspektivischer Seitenansicht in Explosionsdarstellung eine Halterung für wenigstens eine Erfassungseinheit eines Systems gemäß Ausführungsbeispielen;
**Figuren 6A, 6B** die in den Figuren 1A, 1B gezeigten Komponenten, ergänzt um Bewegungspfad-Darstellungen;
**Figuren 7A, 7B, 7C, 7D, 7E, 7F, 7G** die in den Figuren 2A bis 2F gezeigten Komponenten, ergänzt um Bewegungspfad-Darstellungen;
**Figur 8** in schematischer Darstellung Schritte eines Verfahrens gemäß Ausführungsbeispielen;
**Figur 9** in einer Seitenansicht in schematischer Darstellung ein System gemäß Ausführungsbeispielen, bzw. eine damit ausgestattete Fertigungslinie;

### DETAILLIERTE BESCHREIBUNG DER FIGUREN

Die Erfindung wird zunächst unter allgemeiner Bezugnahme auf alle Bezugszeichen und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird ein System 100 zum Monitoring von wenigstens einem Typ Stopp einer Fertigungslinie 1 für zumindest teilweise automatische, bevorzugt vollautomatische Bearbeitung von Verpackungsmaterial 3, insbesondere Kartonagen, zum Erkennen von den wenigstens einen Typ Stopp hervorrufender Fehler/Ursachen, und zum bevorzugt fehlerspezifischen Generieren wenigstens einer visuell und/oder akustisch erfassbaren Handlungsempfehlung 5 zur Fehlerbehebung insbesondere für wenigstens eine die Fertigungslinie bedienende/überwachende Fachkraft 7, wobei die jeweilige Fertigungslinie 1 eine offen zugängliche Fertigungslinie von z.B. über 10m Länge mit mehreren funktional voneinander abgrenzbaren Prozessschritten jeweils mit manueller Eingriffsmöglichkeit zur manuellen Fehlerbehebung im entsprechenden Bereich/Fertigungslinienabschnitt 1.1 des jeweiligen Prozessschrittes ist, wobei das System 100 eine Recheneinheit 10 mit Datenspeicher aufweist, die in Kommunikation mit einer Mehrzahl von die Funktionsweise der Fertigungslinie 1 bzw. des entsprechenden Prozessschrittes überwachenden Sensoren 11 und einer Mehrzahl von optischen Erfassungseinheiten 13, 13' steht (insbesondere Kameras), von denen jeweils wenigstens eine am entsprechenden Fertigungslinienabschnitt 1.1 mit einem Sichtfeld 13a von oben (insbesondere zwecks Anonymisierung) den entsprechenden Fertigungslinienabschnitt einsehend anordenbar/angeordnet ist, bevorzugt in Ausrichtung zumindest annähernd lotrecht nach unten; wobei das System 100 eingerichtet ist, Daten (D) betreffend zumindest einen/den Bewegungspfad 9 entlang wenigstens zweier Fertigungslinienabschnitte 1.1 von wenigstens einer die Fertigungslinie 1 betreuenden Fachkraft 7 (oder auch bereits eines Körperteils der Fachkraft, z.B. eines Arms) zu erfassen und in Reaktion auf einen Stopp zumindest eine zeitlich vordefinierbare Sequenz des Bewegungspfads 9 der Fachkraft 7 mit wenigstens einem spezifischen Typ Stopp, insbesondere wenigstens einem Fehlermerkmal f1, f2, zu korrelieren, zum bevorzugt fehlerspezifischen Generieren der wenigstens einen Handlungsempfehlung 5 und zum Ausgeben wenigstens einer Handlungsaufforderung 5a, z.B. in Dateiform, bevorzugt in Videodateiform, und/oder an wenigstens einer visuellen und/oder akustischen Anzeigeeinheit 15 des Systems 100.

Mit anderen Worten betrifft die Erfindung ein System 100 zum Fehler-Monitoring bei Stopp einer Fertigungslinie 1 für Verpackungsmaterial 3 und zum Erkennen von Fehlern bzw. Ursachen und zum Generieren wenigstens Handlungsempfehlung, wobei die Fertigungslinie 1 wenigstens einen offenen Fertigungslinienabschnitt 1.1 mit wenigstens einer Eingriffsmöglichkeit zur manuellen Fehlerbehebung durch eine Fachkraft aufweist, wobei die Fertigungslinie 1 beispielsweise in wenigstens zwei oder drei funktional voneinander abgrenzbare Prozessschritte 1a, 1b, 1c, ..., 1i (bzw. bzw. Abschnitte der Linie) unterteilt ist, insbesondere mit entsprechenden zeitlich/örtlich aufeinanderfolgenden Fertigungslinienabschnitten. Die Verwendung der Bezeichnung 1i für einen i-ten Prozessschritt verdeutlicht, dass die funktionale Untergliederung des Gesamtprozesses fertigungslinienspezifisch erfolgt, insbesondere soweit einer Klebung nachgelagerte Prozesse wie z.B. Stapeln, Sortieren oder Materialübergabe betroffen sind. Das Ausgeben umfasst dabei vorteilhaft sowohl Handlungsempfehlungen 5 als auch Handlungsaufforderungen 5a, wobei Handlungsempfehlungen 5 beispielsweise auch im Rahmen von bzw. in Hinblick auf Dokumentations- und Schulungsunterlagen generiert werden können, und wobei Handlungsaufforderungen 5a vorteilhaft zumindest annähernd in Echtzeit unmittelbar im Feld generiert werden, gegebenenfalls auch im Zusammenhang mit den Handlungsempfehlungen 5. Insbesondere berücksichtigt die Handlungsaufforderung 5a einen momentanen Bewegungspfad 9 einer/der mit der Fehlerbehebung befassten Fachkraft (oder eines Körperteils wie z.B. eines Arms der Fachkraft) in Reaktion auf einen Stopp und ist systemseitig diesbezüglich individuell angepasst, z.B. was die Richtung oder die Art der empfohlenen Fehlerbehebungsmaßnahme betrifft.

Das jeweilige Sichtfeld kann als ein 360° Rundumsichtfeld oder als ein leicht in oder gegen Förderrichtung (x) ausgerichtetes insbesondere kegelförmiges Sichtfeld ausgestaltet sein, insbesondere mit vordefiniert ausgerichteter Sichtachse, z.B. mit einem Neigungswinkel im Bereich von 10 bis 50° in oder gegen Förderrichtung. Vorteilhaft ist wenigstens eine Erfassungseinheit mit leicht gegen die Förderrichtung geneigtem Sichtfeld implementiert, insbesondere eingangs im Bereich eines/des Materialeinzugs.

Zum Einstellen des jeweils vorteilhaften Sichtfeldes einer jeweiligen Erfassungseinheit 13, 13' kann eine Halterung 14 vorgesehen sein, insbesondere mit wenigstens einer Ausricht-Komponente 14.1 (z.B. aufweisend mehrere relativ zueinander z.B. mittels Klemm- oder Reibschlussverbindungen ausrichtbare Stäbe) und mit wenigstens einer Befestigungs-Komponente 14.3 (z.B. umfassend einen Klemmhebel oder eine Clips-Verbindung). An der Halterung kann zudem eine elektrische Versorgung und wahlweise auch eine drahtgebundene Datenverbindung zur Fertigungslinie vorgesehen sein.

Es ist zu verstehen, dass die jeweilige Halterung 14 der Einfachheit halber für eine statische Halterung bzw. für eine vordefinierte Ausrichtung der jeweiligen Erfassungseinheit sorgt. Insofern kann durch die jeweils adäquate Anzahl, Anordnung und Ausrichtung von Erfassungseinheiten für den gewünschten Detaillierungsgrad bei der Erfassung von Bewegungspfaden gesorgt werden. Wahlweise kann zumindest eine der Halterungen jedoch auch mit wenigstens einem Aktuator für eine vorteilhaft vollautomatische Kameranachführung im Kontext einer Bewegungserfassung ausgestattet sein, z.B. dann, wenn die Verwendung mehrerer Halterungen in einem bestimmten Bereich oder Abschnitt der Fertigungslinie nicht besonders leicht umgesetzt werden kann. Durch wenigstens eine Kameranachführung, d.h., durch wenigstens eine bewegliche Erfassungseinheit, kann demnach auch der vorrichtungstechnische Aufwand gesenkt werden. Hinsichtlich Robustheit und Einfachheit der Implementierung mag es jedoch bevorzugt sein, durchweg fest installierte unbewegliche Erfassungseinheiten mit unveränderlichem vordefiniertem Sichtfeld zu implementieren, was auch die Analyse/Auswertung von Bilddaten und Unregelmäßigkeiten erleichtern bzw. beschleunigen kann.

Vorteilhaft sind zwei unterschiedliche Typen optischer Erfassungseinheiten vorgesehen, insbesondere ein erster Typ Erfassungseinheit 13 mit Rundumsichtfeld und ein zweiter Typ Erfassungseinheit 13' mit in oder gegen Förderrichtung ausgerichtetem kegelförmigen Sichtfeld, wobei die Breite bzw. der Winkel des Sichtfeldes je nach Installationsposition und zu überwachenden Bereich vorgegeben sein kann. Die Erfassungseinheiten 13 vom ersten Typ mit Rundumsichtfeld können besonders gut (makroskopische) Bewegungspfade der jeweiligen Fachkraft entlang der Fertigungslinie zu den einzelnen Fertigungslinienabschnitten erfassen, und die Erfassungseinheiten 13' vom zweiten Typ mit in der Breite oder im Winkel eingeschränktem Sichtfeld können besonders gut eher kurze Bewegungspfade an der jeweiligen manuellen Eingriffsstelle bzw. eher kleine (mikroskopische) Bewegungen, z.B. auch nur von Körperteilen (Hand, Finger, Arm), der jeweiligen Fachkraft erfassen.

Die Erfindung betrifft auch ein Computerprogrammprodukt 20 umfassend Befehle, die bei Ausführung des Computerprogrammproduktes 20 auf einem Computer diesen dazu veranlassen, Schritte zum Steuern/Regeln eines Verfahrens gemäß der vorliegenden Offenbarung auf dem Computer auszuführen, insbesondere ein Computerprogrammprodukt eingerichtet zum Vorgeben der Art und Weise eines Ausgebens wenigstens einer Handlungsempfehlung 5 beim Monitoring von wenigstens einem Typ Stopp der hier beschriebenen offen zugänglichen Fertigungslinie 1 für zumindest teilweise automatische Bearbeitung von Verpackungsmaterial 3, insbesondere eingerichtet zum Vorgeben der Art und Weise eines Erfassens von körperlichen Bewegungen wenigstens einer Fachkraft 7 und zum Vorgeben von Zeitpunkten T1, T2 und/oder Positionen P2 beim Generieren und Ausgeben wenigstens einer Handlungsempfehlung 5 und/oder Handlungsaufforderung 5a zur Fehlerbehebung insbesondere in Reaktion auf einen und in zeitlichem Zusammenhang mit einem Stopp.

Das Ausgeben kann an unterschiedlichen örtlichen Stellen und auch auf unterschiedlichen Geräten erfolgen, z.B. auch auf einem Endgerät 30 und/oder an einem fertigungslinienspezifischen oder gegebenenfalls auch systemfremden Bediener-Terminal 40. Das Ausgeben insbesondere von Handlungsaufforderungen (insbesondere zumindest annähernd in Echtzeit erfolgendes Ausgeben) erfolgt vorteilhaft zumindest auch an wenigstens einer Wiedergabe-Position P2 für das Ausgeben. Das Computerprogrammprodukt 20 kann eingerichtet sein, eine grafische Benutzerschnittstelle 41 mit Eingabemaske insbesondere zum Anfordern von Handlungsempfehlungen/-aufforderungen bereitzustellen, wobei über die grafische Benutzerschnittstelle beispielsweise auch (z.B. passwortgeschützter) Zugang zu einer Administrator-Plattform 70 gewährt werden kann.

Eine entsprechende Steuerungs-/Regelungsvorgabe kann wahlweise über ein zentrales Steuerungs-/Regelungssystem 50 oder über eine dezentrale (insbesondere fertigungslinienspezifische) Steuerungs-/Regelungseinrichtung 60 generiert werden. Das hier beschriebene System bzw. die entsprechende Fertigungslinie kann mit wenigstens einem Kommunikationsmodul für wenigstens ein Kommunikationsprotokoll ausgestattet sein.

Bereitgestellt wird zudem ein Verfahren zum Monitoring von wenigstens einem Typ Stopp einer offen zugänglichen Fertigungslinie 1 für zumindest teilweise automatische, bevorzugt vollautomatische Bearbeitung von Verpackungsmaterial 3, insbesondere Kartonagen, zum Erkennen von den wenigstens einen Typ Stopp hervorrufender Fehler, und zum bevorzugt fehlerspezifischen Generieren (Schritt S3) wenigstens einer visuell und/oder akustisch erfassbaren Handlungsempfehlung 5 zur Fehlerbehebung insbesondere für wenigstens eine die Fertigungslinie 1 bedienende/überwachende Fachkraft 7, wobei eine Mehrzahl von die Funktionsweise der Fertigungslinie 1 überwachenden Sensoren 11 und eine Mehrzahl von optischen Erfassungseinheiten 13 in Kommunikation mit einer Recheneinheit 10 mit Datenspeicher stehen, wobei die optischen Erfassungseinheiten 13 mit einem Sichtfeld 13a von oben einen entsprechenden Fertigungslinienabschnitt 1.1 einsehen; wobei Daten (D) betreffend zumindest den Bewegungspfad 9 entlang wenigstens zweier Fertigungslinienabschnitte 1.1 von wenigstens einer die Fertigungslinie 1 betreuenden Fachkraft 7 erfasst werden (Schritt S1) und in Reaktion auf einen Stopp zumindest eine zeitlich vordefinierbare Sequenz des Bewegungspfads der Fachkraft mit wenigstens einem spezifischen Typ Stopp korreliert wird (Schritt S2), zum bevorzugt fehlerspezifischen Generieren der wenigstens einen Handlungsempfehlung und zum Ausgeben (Schritt S4) wenigstens einer Handlungsaufforderung 5a, insbesondere in Dateiform und/oder an wenigstens einer visuellen und/oder akustischen Anzeigeeinheit. Dabei kann die Reihenfolge der Schritte des Erfassens (Schritt **S1**), des Korrelierens (Schritt **S2**), des Generierens (Schritt **S3**) und des Ausgebens (Schritt **S4**) auch variiert werden, oder die Schritte können überlagert werden. Systemseitig können weitere nachgelagerte Schritte (Schritte **S5**) vorgesehen sein, insbesondere basierend auf einer jeweils erfassten Nutzerinteraktion (Bewegung und/oder Nutzereingabe), insbesondere basierend auf einem Erfassen und Auswerten (Schritt **S5a**) von tatsächlichen im Feld vorgenommener Fehlerbehebungsmaßnahmen. Dabei kann die zeitlich vordefinierbare Sequenz des Bewegungspfads (bzw. das entsprechende Erfassen, Schritt S1) auf ein Zeitfenster T1 von z.B. mindestens drei Sekunden vor dem Stopp und/oder mindestens fünf Sekunden nach dem Stopp definiert sein/werden. Dabei kann systemseitig wenigstens ein Wiedergabe-Zeitfenster T2 für das Ausgeben der wenigstens einen Handlungsaufforderung definiert ist/wird.

Im Folgenden werden Besonderheiten der Erfindung unter Bezugnahmen auf einzelne Figuren bzw. Ausführungsbeispiele erläutert.

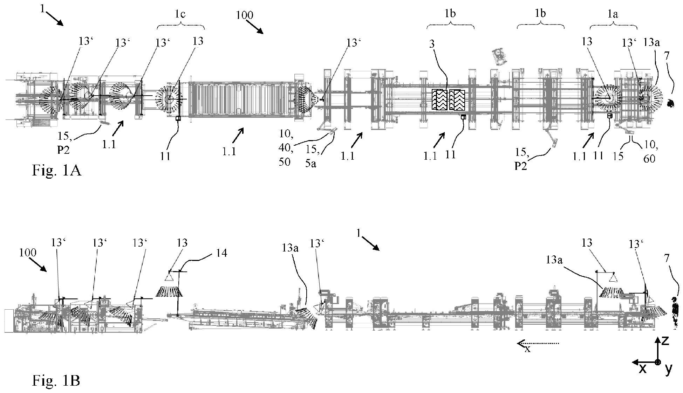

In den **Fig. 1** ist ein erstes Ausführungsbeispiel für eine Implementierung des hier beschriebenen Systems 100 an einer Fertigungslinie 1 gezeigt, wobei die Fertigungslinie z.B. in Ausgestaltung als Faltschachtelklebemaschine mit einer Maschinengeschwindigkeit im Bereich von ca. 250m/min und je nach Definition wenigstens drei bis fünf funktional voneinander abgrenzbaren Abschnitten bzw. Prozessschritten ausgestaltet ist. Der Fachmann versteht basierend auf der vorliegenden Offenbarung, dass fertigungslinienseitige Variationen jeweils im hier beschriebenen System 100 aufgegriffen und abgebildet werden können, z.B. was Anzahl/Anordnung/Ausrichtung der hier beschriebenen Erfassungseinheiten 13 und/oder Anzeigeeinheiten 15 und/oder Steuerung/Regelung der einzelnen Schritte S1 bis S5 und/oder Ausgestaltung und Art und Weise der Handlungsaufforderungen 5 betrifft. In **Fig. 1A** ist in einer Draufsicht erkennbar, dass sich eine/die Fachkraft 7 momentan am Einzug am Kopf der Fertigungslinie aufhält; für den Fall dass eine Fehlerursache im Bereich des Prozessschrittes 1c viel weiter stromab unten an der Fertigungslinie auftritt, können die Handlungsempfehlungen/- aufforderungen z.B. zumindest auch unmittelbar dort im Umgebungsbereich ausgegeben werden . Dabei sind beispielhaft drei funktional voneinander abgrenzbare Prozessschritte 1a, 1b, 1c angedeutet, nämlich die entsprechenden Fertigungslinienabschnitte 1.1 für den Prozessschritt 1a des Einzugs, für mehrere Prozessschritte 1b der Faltung, und für den Prozessschritt 1c der Schiefklebung (wahlweise gefolgt von einem Ausschleuse-Modul). Es ist zu verstehen, dass weitere Prozessschritte wie z.B. Leimen, Richtungswechsel, Aufstoppen, Ausgeben/Auswerfen vorgesehen sein können, welche jedoch hier der Übersichtlichkeit halber nicht explizit beschrieben werden. Es ist davon auszugehen, dass wenigstens drei aufeinanderfolgende bzw. funktional voneinander abgrenzbare Prozessschritte implementiert sind, an welchen jeweils auch potentiell eine Fehlerursache auf effektive/effiziente Weise behoben können werden muss. Die in Fig. 1A angedeuteten Sensoren 11 zur Überwachung der Funktionsweise des entsprechenden Prozessschrittes deuten an, dass die Implementierung des hier beschriebenen Systems 100 nicht nur basierend auf mittels der Erfassungseinheiten 13, 13a erhobener Daten, sondern auch basierend auf mittels zusätzlicher Sensorik erhobener (Mess-)Daten erfolgen kann, insbesondere mittels fertigungslinienspezifischer Sensoren, die individuell für einen jeweiligen Prozessschritt implementiert sein können, z.B. für den Einzug, für die Faltung, für die Schiefklebung, für das Leimen, für den Richtungswechsel, für das Aufstoppen, und/oder für das Ausgeben bzw. Auswerfen. Da derartige Sensorik vorteilhaft in Abhängigkeit von der spezifischen Ausgestaltung einer jeweiligen Fertigungslinie implementiert ist/wird, bleibt eine diesbezügliche Beschreibung an dieser Stelle allgemein.

In **Fig. 1B** sind die individuell dimensionierten, geformten und ausgerichteten Sichtfelder der einzelnen Erfassungseinheiten erkennbar. Die beiden Typen von Erfassungseinheiten 13, 13' sind jeweils an Halterungen 14 positioniert und mit deren jeweiligem Sichtfeld 13a spezifisch ausgerichtet, hier insbesondere mit vier Erfassungseinheiten mit einem in Förderrichtung (y) ausgerichteten Sichtfeld und einer Erfassungseinheiten mit einem gegen Förderrichtung (y) ausgerichteten Sichtfeld. Fig. 1B deutet zudem die Längserstreckungsrichtung x der Fertigungslinie (hier entsprechend der Förderrichtung), die Querrichtung y, und die Höhenrichtung bzw. Hochachse z an. Es versteht sich, dass die ganz auf rechter Hand in der Darstellung gezeigte Fachkraft 7 vergleichsweise viel Zeit benötigen würde, sich entlang der Fertigungslinie 1 auf Fehlerursachen-Suche zu begeben, allein was die Wegstrecke betrifft. Das hier beschriebene System 100 kann, vorteilhaft zumindest annähernd in Echtzeit und vorteilhaft auch KI-gestützt, die Analyse von potentiellen Fehlern insbesondere im Kontext mit Maschinenstopps (oder zwecks vorbeugender Behebung kleinerer Fehlerursachen, die selbst noch keinen unmittelbaren Maschinenstopp zur Folge haben) deutlich erleichtern, beschleunigen, und auch von den größentechnischen Nachteilen einer entsprechenden Fertigungslinie entkoppeln, insbesondere indem auf akustische und/oder visuelle Art und Weise auf den jeweiligen Ort (Position, Stelle) und vorteilhaft auch auf die diagnostizierte Art der Fehlerursache hingewiesen wird. Für das Ausgeben (Schritt S4) können auch an mehreren Stellen der Fertigungslinie positionierte, vergleichsweise großflächige Anzeigeeinheiten 15 genutzt werden, was die Fehlererkennung (das Verstehen einer Fehlerursache) durch die jeweilige involvierte Fachkraft auch aus großer räumlicher Distanz erleichtert und ein zeiteffizientes und effektives Einleiten von insbesondere manuellen Fehlerbehebungsmaßnahmen begünstigt. Nicht zuletzt kann hierdurch auch der personelle Betreuungsaufwand für eine jeweilige Fertigungslinie reduziert werden, beispielsweise indem einer einzelnen Fachkraft die Verantwortung für mehrere Fertigungslinien übertragen wird, oder indem bei einer bisher durch mehrere Fachkräfte betreuten Fertigungslinie die Betreuung durch nur noch eine einzige Fachkraft erledigt wird.

Im Ausführungsbeispiel gemäß den Fig. 1 sind zwei Erfassungseinheiten 13 vom ersten Typ (Rundum-Sichtfeld) und fünf Erfassungseinheiten 13' vom zweiten Typ (räumlich ausgerichtetes und wahlweise fokussiertes/eingeschränktes Sichtfeld) implementiert. Der Fachmann kann ausgehend von der vorliegenden Offenbarung Typenauswahl, Anzahl, Position und Ausrichtung der Erfassungseinheiten auch variieren und z.B. chargenspezifisch anpassen.

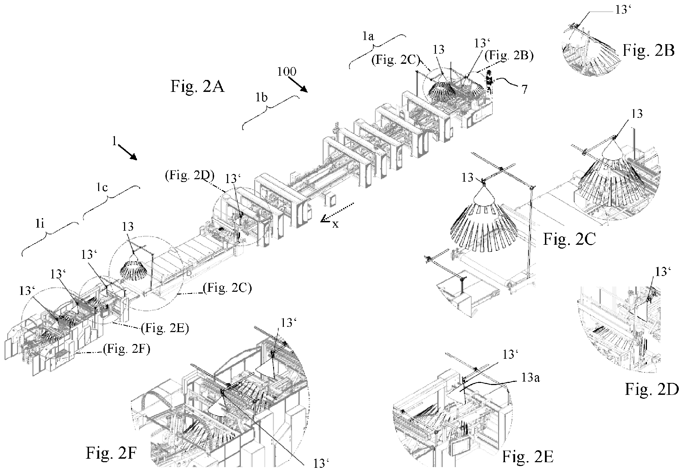

In den Fig. 2 ist jeweils in perspektivischer Ansicht ein/das Ausführungsbeispiel für eine Implementierung des hier beschriebenen Systems 100 an einer offen zugänglichen Verpackungsmaterial-Fertigungslinie 1 gezeigt (z.B. Faltschachtelklebemaschine). Der Fachmann versteht basierend auf den beispielhaft beschriebenen/illustrierten Erfassungseinheiten bzw. deren Anzahl/Anordnung/Ausrichtung (insbesondere deren jeweiliges Sichtfeld, hier gegen die Förderrichtung (x) illustriert), auf welche Weise das hier beschriebene System 100 insbesondere auch in Abstimmung mit eine fertigungslinienspezifischen sensorischen Erfassung implementiert werden kann.

In **Fig. 2A** ist in perspektivischer Ansicht eine Fertigungslinie gezeigt, welche eine Vielzahl von offen zugänglichen Abschnitten bzw. eine Vielzahl aufeinanderfolgender funktional voneinander abgrenzbarer Prozessschritte aufweist. Es ist ersichtlich, dass die einzelnen Abschnitte bzw. Prozessschritte auch modulartig miteinander gekoppelt werden können, gegebenenfalls in anderer Reihenfolge als gezeigt; demnach wird deutlich, dass das Verarbeiten von individuellen Verpackungsmaterial-Chargen eine hohe prozessuale Flexibilität und Variabilität erfordert, die auch dank der Ausgestaltung des erfindungsgemäßen Systems 100 im Kontext mit dem hier beschriebenen Monitoring sichergestellt werden kann (vergleiche dazu auch Figur 11). Der Vollständigkeit halber sei erwähnt, dass in Fig. 2A der Abschnitt, welcher im Detail in Fig. 2D wiedergegeben ist, nicht explizit als funktional abgegrenzter Prozessabschnitt der Fertigungslinien gekennzeichnet ist; gleichwohl mag auch diesem Abschnitt je nach Definition des Funktionsumfangs eine eigene Funktion zukommen. In **Fig. 2B** ist die Anordnung und Ausrichtung einer ersten Erfassungseinheit des zweiten Typs 13' mit Sichtfeld gegen die Förderrichtung (x) dargestellt, insbesondere betreffend den Material-Einzug. Basieren auf dieser Ausrichtung und dieses einschränkten bzw. fokussierten Sichtfeldes kann auch ein Bewegungspfad nur eines Körperteils der jeweiligen Fachkraft (hier auch als "mikroskopisch" bezeichnet) besonders zweckdienlich erfasst werden. In **Fig. 2C** ist die Anordnung und Ausrichtung von zwei Erfassungseinheit 13 des ersten Typs mit Rundum-Sichtfeld dargestellt, wobei auf die entsprechenden Positionen dieser Erfassungseinheit 13, wie in Fig. 2A gezeigt, Bezug genommen wird (in Fig. 2C sind diese Positionen zusammengefasst zu einer Detaildarstellung). Mittels dieser Rundumsicht-Erfassungseinheiten 13 kann ein makroskopischer Bewegungspfad der jeweiligen Fachkraft besonders zweckdienlich erfasst werden. In **Fig. 2D** ist die Anordnung und Ausrichtung einer zweiten Erfassungseinheit des zweiten Typs 13' mit Sichtfeld in Förderrichtung (x) dargestellt, insbesondere betreffend einen Aufstopp-Vorgang bezüglich der Charge (Material, Kartonage), also betreffend einen Vorgang stromab zum Fertigungslinienabschnitt bzw. Prozess 1b, wobei das Sichtfeld nicht notwendigerweise kegelförmig ist, sondern auch fächerförmig ausgestaltet bzw. eingeschränkt sein kann. Die spezifische Eingrenzung des Sichtfeldes insbesondere in Abhängigkeit von der überwachten Stelle bzw. vom erfassten Verarbeitungsschritt kann auch die zu analysierende Datenmenge minimieren und die Auswertung fehlersicherer bzw. qualitativ hochwertiger ausgestalten. In **Fig. 2E** ist die Anordnung und Ausrichtung einer dritten Erfassungseinheit des zweiten Typs 13' mit Sichtfeld in Förderrichtung (x) dargestellt, insbesondere betreffend eine Schiefklebung (Fertigungslinienabschnitt bzw. Prozess 1c). In **Fig. 2F** ist die Anordnung und Ausrichtung einer vierten und fünften Erfassungseinheit jeweils des zweiten Typs 13' mit Sichtfeld in Förderrichtung (x) dargestellt, insbesondere betreffend Verarbeitungs-Vorgänge stromab von der (Schief-)Klebung, insbesondere betreffend Materialausgabe, Stapeln, Sortieren oder dergleichen Prozesse.

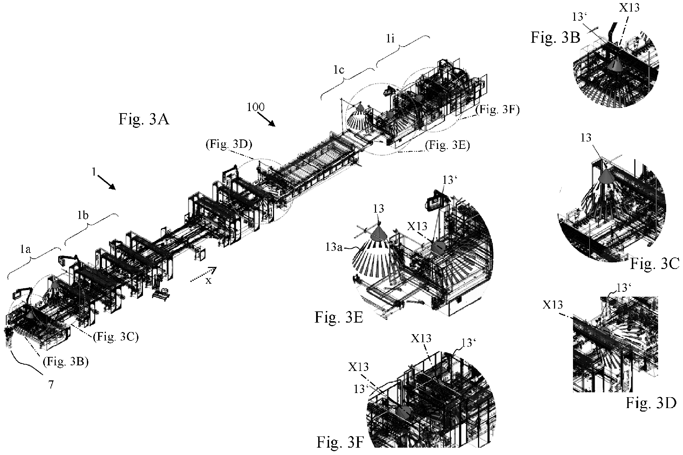

In den **Fig. 3** ist jeweils in perspektivischer Ansicht ein/das Ausführungsbeispiel für eine Implementierung des hier beschriebenen Systems 100 an einer offen zugänglichen Verpackungsmaterial-Fertigungslinie 1 gezeigt (z.B. Faltschachtelklebemaschine). Der Fachmann versteht basierend auf den beispielhaft beschriebenen/illustrierten Erfassungseinheiten bzw. deren Anzahl/Anordnung/Ausrichtung (insbesondere deren jeweiliges Sichtfeld, nun in Förderrichtung (x) illustriert), auf welche Weise das hier beschriebene System 100 insbesondere auch in Abstimmung mit eine fertigungslinienspezifischen sensorischen Erfassung implementiert werden kann.

In **Fig**. **3A** ist in perspektivischer Ansicht eine/die Fertigungslinie gemäß Fig. 2A gezeigt, bei anderer Perspektive. In **Fig. 3B** ist die Anordnung und Ausrichtung einer/der ersten Erfassungseinheit des zweiten Typs 13' mit Sichtfeld gegen die Förderrichtung (x) dargestellt. In **Fig. 3C** ist die Anordnung und Ausrichtung einer/der Erfassungseinheit 13 des ersten Typs mit Rundum-Sichtfeld dargestellt, insbesondere im prozessualen Bereich einer Faltung des Verpackungsmaterials. In **Fig. 3D** ist die Anordnung und Ausrichtung einer/der zweiten Erfassungseinheit des zweiten Typs 13' mit Sichtfeld in Förderrichtung (x) dargestellt, insbesondere im prozessualen Bereich eines Richtungswechsels und/oder Aufstoppens. In **Fig. 3E** sind Anordnung und Ausrichtung einer dritten Erfassungseinheit des zweiten Typs 13' und einer zweiten Erfassungseinheit des ersten Typs 13 dargestellt, insbesondere im prozessualen Bereich einer Schiefklebung. In **Fig. 3F** sind Anordnung und Ausrichtung einer vierten und fünften Erfassungseinheit jeweils des zweiten Typs 13' mit Sichtfeld (und gemäß Fig. 3F auch Blickrichtung( in Förderrichtung (x) dargestellt, insbesondere betreffend Materialausgabe, Stapeln, Sortieren oder dergleichen Prozesse.

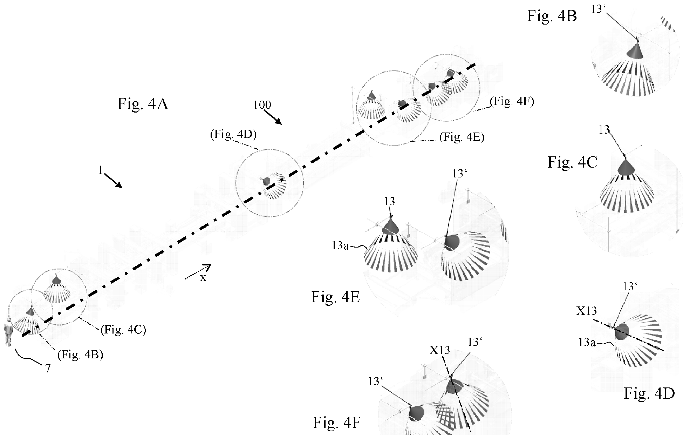

In den **Fig. 4** sind die Sichtfelder der jeweiligen Erfassungseinheit stärker hervorgehoben, jeweils in Förderrichtung (x) illustriert, wobei für Komponenten der Fertigungslinie und/oder des Systems jeweils auf die weiteren Figuren verwiesen wird, insbesondere auf die Figuren 3A bis 3F.

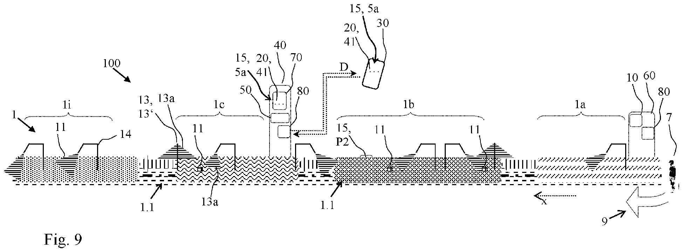

In **Fig. 4A** ist eine/die Fertigungslinie gemäß Figur 3A schematisch wiedergegeben, bei demgegenüber hervorgehobenen Erfassungseinheiten 13, 13' und deren Sichtfelder 13a. In den **Fig. 4B, Fig. 4C, Fig. 4D, Fig. 4E, Fig. 4F** sind/werden die Ansichten gemäß Figuren 3B bis 3F wiederholt, bei gegenüber der jeweils nur schematisch dargestellten Fertigungslinienabschnitte hervorgehoben Erfassungseinheiten. Wahlweise kann die Fertigungslinie auch an noch weiteren Abschnitten bzw. Stellen und in weiteren Ausrichtungen mit Erfassungseinheiten ausgestattet sein. Beispielsweise steht die jeweilige Erfassungseinheit in datenkommunikativer Verbindung mit einer dezentralen Steuerungs-/Regelungseinrichtung 60 und/oder einem zentralen Steuerungs-/Regelungssystem 50, wie in Fig. 9 angedeutet.

In den Figuren 3 und 4 sind zwecks besseren Verständnisses auch die jeweils vordefiniert ausgerichteten Sichtachsen X13 einiger der im Sichtfeld fokussierten Erfassungseinheiten 13' durch Strichpunktlinien angedeutet. Aufgrund der sich in den Figuren 3 überlagernden Komponenten wird bezüglich relativer Anordnung und Ausrichtung der jeweiligen Erfassungseinheit auch auf die Darstellung gemäß Figuren 4 hingewiesen bzw. verwiesen. Insofern ist die in den Figuren 3 und 4 gezeigte Offenbarung auch als sich ergänzende Offenbarung zu verstehen.

Es ist zu verstehen, dass von den in den Figuren 1 bis 4 gezeigten Anzeigeeinheiten wenigstens eine Anzeigeeinheit als Komponente eines Bediener-Terminals ausgestaltet bzw. bereitgestellt sein kann.

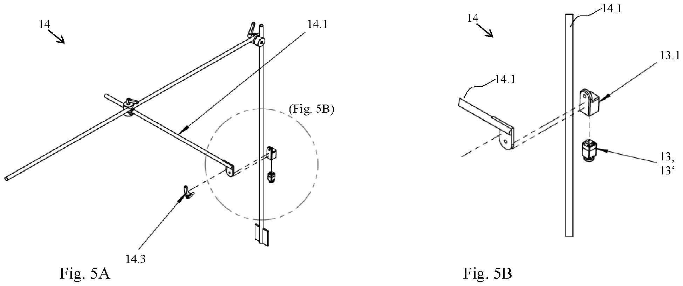

In den **Fig. 5** sind Details zu einer bespielhaften Ausgestaltung einer Halterung 14 für die jeweilige Erfassungseinheit 13, 13' illustriert, wobei die jeweilige Halterung 14 zum Einstellen des jeweils vorteilhaften Sichtfeldes einer jeweiligen Erfassungseinheit 13, 13' vorteilhaft sowohl in der Höhe als auch um wenigstens eine Raumachse, vorteilhaft um wenigstens zwei Raumachsen eingestellt werden kann. Vorteilhaft umfasst eine erste Ausricht-Komponente 14.1 mehrere relativ zueinander z.B. mittels Klemm- oder Reibschlussverbindungen ausrichtbare Stäbe, und mittels wenigstens einer Befestigungs-Komponente 14.3 (z.B. Klemmhebel oder Clips-Verbindung) kann z.B. ein Kameragehäuse 13.1 an einer der Ausricht-Komponenten 14.1 befestigt sein/werden. Der Vollständigkeit halber sei erwähnt, dass die Erfassungseinheit nicht notwendigerweise durch eine Kamera gebildet sein muss.

In **Fig. 5A** ist eine stabförmig aufgebaute Halterung 14 gezeigt, hier am Beispiel von wenigstens drei Stäben und wenigstens zwei Verstellachsen. Die Halterung 14 selbst ist vorteilhaft an einer Komponente der Fertigungslinie befestigt, z.B. mittels der in Fig. 5A am unteren Ende der Halterung 14 angedeuteten Platte, z.B. an einem (Maschinen-)Gehäuse im entsprechenden Abschnitt der Fertigungslinie. In **Fig. 5B** ist die Kameramontage bzw. Kamerabefestigung gezeigt, vorteilhaft an einem freien Ende eines/des letzten der Stäbe der Halterung ausgeführt.

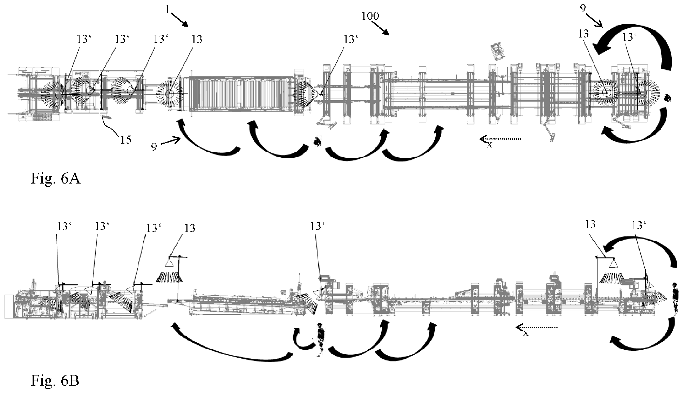

In den **Fig. 6** ist eine beispielhafte Situation für potentielle Bewegungspfade mehrerer Fachkräfte entlang einer/der Fertigungslinie dargestellt. In **Fig. 6A** wird deutlich, welche unterschiedlichen Möglichkeiten eine Fachkraft hat, zu einer von mehreren manuellen Eingriffsstellen an der Fertigungslinie zu gelangen. In **Fig. 6B** ist ersichtlich, dass bei einem unvorteilhaften Manöver einer Fachkraft in eine falsche Richtung viel Zeit vergehen mag, bis die Fachkraft das Manöver korrigiert und sich auf den richtigen Kurs zur Fehlerquelle begibt. Das hier beschriebene System kann diesbezüglich wirkungsvoll assistieren, z.B. indem im örtlichen Bereich der Fehlerquelle zusätzlich zu visuellen Ausgaben auch akustische Ausgaben generiert werden.

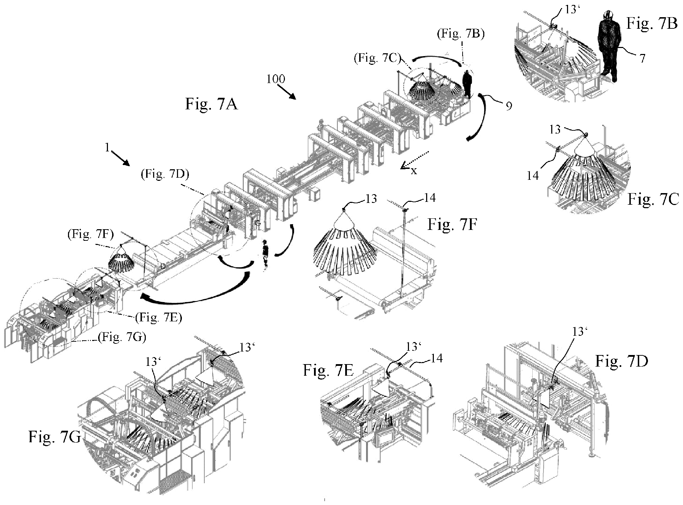

In den **Fig. 7** werden die bereits in den Figuren 2 dargestellten Komponenten aufgegriffen und im Kontext von unterschiedlichen potentiellen Bewegungspfaden wenigstens einer Fachkraft wiedergegeben.

In **Fig. 7A** ist angedeutet, in welcher Richtung (Bewegungspfad 9) die jeweilige Fachkraft 7 eine potentielle Fehlerbehebungsmaßnahme einleiten kann. In **Fig. 7B** ist ein erster funktional abgrenzbarer Abschnitt der Fertigungslinie dargestellt. In **Fig. 7C** ist eine Erfassungseinheit mit Rundumsicht gezeigt. In **Fig. 7D** ist ein Abschnitt im Bereich oder nach einer Aufstoppung des Materials gezeigt. In den **Fig. 7E, Fig.** 7F ist ein Abschnitt nach einer Schiefklebung gezeigt. In **Fig. 7G** ist ein Abschnitt entsprechend einem Endbearbeitungsschritt wie z.B. Materialausleitung gezeigt.

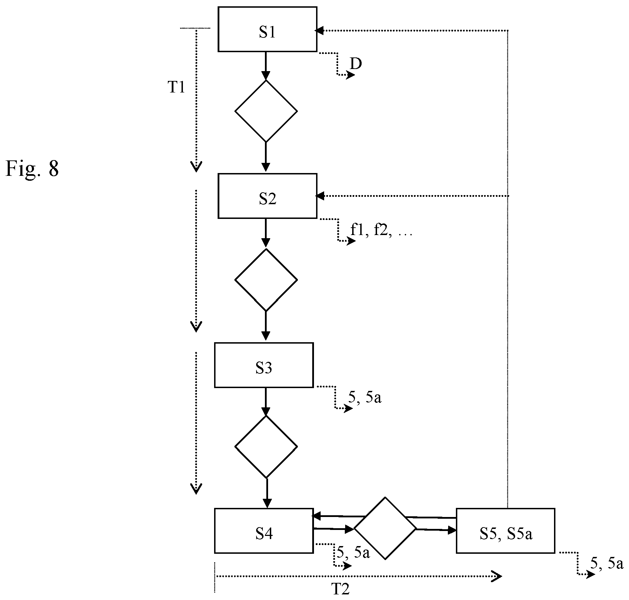

In **Fig. 8** sind Schritte eines/des Verfahrens zum Monitoring von wenigstens einem Typ Stopp einer/der hier beschriebenen Fertigungslinie dargestellt, wobei das Verfahren zum Erkennen (Schritte S1, S2) von den wenigstens einen Typ Stopp hervorrufender Fehler und zum Generieren (Schritt S3) wenigstens einer visuell und/oder akustisch erfassbaren Handlungsempfehlung zur Fehlerbehebung implementiert ist, wobei wenigstens ein (momentaner) Bewegungspfad von wenigstens einer die Fertigungslinie betreuenden Fachkraft erfasst wird (Schritt S1) und in Reaktion auf einen Stopp zumindest eine zeitlich vordefinierbare Sequenz des Bewegungspfads der Fachkraft mit wenigstens einem spezifischen Typ Stopp korreliert wird (Schritt S2), zum bevorzugt fehlerspezifischen Generieren der wenigstens einen Handlungsempfehlung und zum Ausgeben (Schritt S4) wenigstens einer Handlungsaufforderung. Das Ausgeben kann dabei auch an örtlich vorgegebenen Positionen entlang der Fertigungslinie erfolgen, z.B. unmittelbar im Bereich der Fehlerursache (sofern dort eine Anzeigeeinheit platziert ist). Dabei kann die Reihenfolge der Schritte des Erfassens (Schritt **S1**), des Korrelierens (Schritt **S2**), des Generierens (Schritt **S3**) und des Ausgebens (Schritt **S4**) auch variiert werden, oder die Schritte können überlagert werden. Systemseitig können weitere nachgelagerte Schritte (Schritte **S5**) vorgesehen sein, insbesondere basierend auf einem Erfassen und Auswerten (Schritt **S5a**) von tatsächlichen im Feld vorgenommener Fehlerbehebungsmaßnahmen. Dies kann z.B. im Kontext des Generierens von Schulungsunterlagen (allgemeinen Handlungsempfehlungen) von besonderem Nutzen sein. Dabei können auch Zeitfenster T1 für das Erfassen und/ Wiedergabe-Zeitfenster T2 für das Ausgeben definiert sein/werden.

Die in Fig. 8 angedeuteten rautenförmigen Felder zwischen den einzelnen Schritten veranschaulichen für den Fachmann insbesondere fertigungslinienspezifisch implementierbare Steuerungs-/Regelungsmaßnahmen, insbesondere auch als Funktion von momentan erhobenen Sensordaten, beispielsweise auch was eine Reaktivierung des Produktionsprozesses nach erfolgtem Stopp betrifft.

In **Fig. 9** wird die Erfindung unter Bezugnahme auf eine schematisch angedeutete Fertigungslinie einschließlich weiterer im Kontext mit der weiter oben beschriebenen Recheneinheit agierenden Datenverarbeitungs-Komponenten beschrieben, wobei diese Datenverarbeitungs-Komponenten auch bei den zuvor weiter oben beschriebenen Fertigungslinien bzw. Systemen vorgesehen sein können. Die Fertigungslinie 1 umfasst insbesondere ein Bediener-Terminal 40, welches Zugang zu einer Administrator-Plattform 70 gewähren kann, über welche mittels des hier beschriebenen Computerprogrammprodukts 20 eine/die grafische Benutzerschnittstelle 41 mit Eingabemaske insbesondere zum Anfordern von Handlungsempfehlungen/-aufforderungen bedient bzw. genutzt werden kann. Am Bediener-Terminal 40 kann zudem ein/das ein zentrale/s Steuerungs-/Regelungssystem 50 implementiert sein, wahlweise in Ergänzung zu einer dezentralen Steuerungs-/Regelungseinrichtung 60. Insbesondere die hier explizit genannten Datenverarbeitungs-Komponenten können jeweils über Kommunikationsmodule 80 in drahtloser Verbindung zueinander stehen. Vorteilhaft ist das Bediener-Terminal 40 an die jeweilige Fertigungslinie 1 angebunden, wohingegen Administrator-Plattform 70 wahlweise auch von anderen Stellen bzw. Datenverarbeitungs-Komponenten zugänglich implementiert sein kann, beispielsweise über die (dezentrale) Steuerungs-/Regelungseinrichtung 60. Der Fachmann kann ausgehend von der vorliegenden Offenbarung vorgeben, an welche Stellen und über welche Komponenten eine jeweilige Zugangsberechtigung implementiert sein mag. Beispielsweise mag es sinnvoll sein, der jeweiligen Fachkraft örtlich unabhängig eine Ausgabe von Handlungsempfehlungen/-aufforderungen zu ermöglichen, beispielsweise um wiederholt eine bestimmte Video-Sequenz insbesondere im Zeitraffer abzuspielen, wohingegen es insbesondere aus sicherheitstechnischen Gründen vorteilhaft sein mag, einen Wiederanlauf bzw. Re-Start des Verarbeitungsprozesses ausschließlich über die Administrator-Plattform 70 zu ermöglichen, insbesondere ausschließlich von einer einzigen Position entlang der Fertigungslinie (vorteilhaft am Bediener-Terminal 40 als Haupt-Instanz). Wahlweise ist das Bediener-Terminal 40 ein für mehrere Fertigungslinien gemeinsam agierendes Bediener-Terminal 40. In Fig. 9 ist angedeutet, dass auch ein/das jeweilige Endgerät 30 mit einer visuellen und/oder akustischen Anzeigeeinheit 15 ausgestattet sein kann. Die Fachkraft 7 bzw. der involvierte Nutzer kann eine Handlungsempfehlung/-aufforderung wahlweise auf wenigstens einer stationären Anzeigeeinheit und/oder auf einem/dem Endgerät empfangen.

In Fig. 9 ist eine Situation dargestellt, in welcher eine Fehlerursache im Bereich des Prozessschrittes 1b diagnostiziert wurde, wobei die entsprechende (wenigstens eine angetriggerte bzw. angesteuerte) Anzeigeeinheit 15 vorteilhaft ebenfalls in diesem Fertigungslinienabschnitt 1b, 1.1 angeordnet ist; der Nutzer 7 kann daraufhin zeiteffizient an die entsprechende Wiedergabe-Position P2 bzw. an die Stelle der Fehlerursache gelangen, insbesondere gemäß Bewegungspfad 9.

Es ist zu verstehen, dass die in den Figuren gezeigte relative Anordnung von Erfassungseinheiten, Anzeigeeinheiten, Sensoren und dergleichen für die Datenverarbeitung nutzbarer Komponenten variiert werden kann; insbesondere kann die jeweilige Position einer Erfassungseinheit bezüglich der Position von Sensoren und/oder offener Abschnitte mit manueller Eingriffsmöglichkeit variiert werden. Beispielsweise sind auch die in den Figuren gezeigten Komponenten 10, 40, 50, 60 variabel positionierbar, insbesondere da die jeweilige Fertigungslinie modulartig für die einzelnen funktional voneinander abgrenzbaren Prozessschritte zusammengestellt sein kann, so dass wahlweise je Prozessschritt eine eigene bzw. spezifische Steuerung/Regelung vorgesehen sein mag. Auch das in Fig. 9 gezeigte Terminal 40 mag andersartig positioniert sein, beispielsweise auch derart, dass es über eine zentrale Anzeigeeinheit für mehrere Fertigungslinien innerhalb einer Produktionshalle bzw. Maschinenhalle zumindest visuell zugänglich ist.

### Bezugszeichenliste

- 1: Fertigungslinie
- 1.1: offener Fertigungslinienabschnitt
- 1a, 1b, 1c, ..., 1i: funktional voneinander abgrenzbare Prozessschritte bzw. Abschnitte
- 3: Verpackungsmaterial
- 5, 5a: Handlungsempfehlung, Handlungsaufforderung
- 7: Fachkraft
- 9: Bewegungspfad einer Fachkraft
- 10: Recheneinheit
- 11: Sensor
- 13: optische Erfassungseinheit vom ersten Typ (insbesondere mit Rundumsichtfeld)
- 13': optische Erfassungseinheit vom zweiten Typ (insbesondere mit fokussiertem Sichtfeld)
- 13a: Sichtfeld
- 13.1: Kameragehäuse
- 14: Halterung für Erfassungseinheit
- 14.1: Ausricht-Komponente der Halterung
- 14.3: Befestigungs-Komponente der Halterung
- 15: Anzeigeeinheit
- 20: Computerprogrammprodukt
- 30: Endgerät
- 40: Bediener-Terminal
- 41: grafische Benutzerschnittstelle mit Eingabemaske
- 50: zentrales Steuerungs-/Regelungssystem
- 60: Steuerungs-/Regelungseinrichtung
- 70: Administrator-Plattform
- 80: Kommunikationsmodul
- D: erfasste (Bild-/Video-)Daten
- P2: wenigstens eine Wiedergabe-Position für das Ausgeben
- S1: Schritt des Erfassens
- S2: Schritt des Korrelierens
- S3: Schritt des Generierens
- S4: Schritt des Ausgebens
- S5: nachgelagerte Schritte insbesondere basierend auf Nutzerinteraktion
- S5a: Erfassen und Auswerten von Fehlerbehebungsmaßnahmen
- T1: Zeitfenster für Erfassung Bewegung/Bewegungspfad der entsprechenden Fachkraft
- T2: wenigstens ein Wiedergabe-Zeitfenster für das Ausgeben
- X13: vordefiniert ausgerichtete Sichtachse
- x, y, z: Längserstreckungsrichtung (bzw. Förderrichtung), Querrichtung, Höhenrichtung

## Patentansprüche

1. System (100) zum Monitoring von wenigstens einem Typ Ereignis, insbesondere Stopp einer Fertigungslinie (1) für zumindest teilweise automatische Bearbeitung von Verpackungsmaterial (3), zum Erkennen von den wenigstens einen Typ Stopp/Ereignis hervorrufender Fehler oder Ursachen, und zum Generieren wenigstens einer Handlungsempfehlung (5) zur Fehlerbehebung insbesondere für wenigstens eine die Fertigungslinie bedienende Fachkraft (7), wobei das System für eine offen zugängliche Fertigungslinie mit mehreren funktional voneinander abgrenzbaren Prozessschritten jeweils mit manueller Eingriffsmöglichkeit zur manuellen Fehlerbehebung in einem entsprechenden Fertigungslinienabschnitt (1.1) des jeweiligen Prozessschrittes eingerichtet ist, wobei das System (100) eine Recheneinheit (10) mit Datenspeicher aufweist, die in Kommunikation mit einer Mehrzahl von die Funktionsweise der Fertigungslinie (1) überwachenden Sensoren (11) und einer Mehrzahl von optischen Erfassungseinheiten (13) steht, von denen jeweils wenigstens eine am entsprechenden Fertigungslinienabschnitt (1.1) mit einem Sichtfeld (13a) von oben den entsprechenden Fertigungslinienabschnitt einsehend anordenbar/angeordnet ist;
**dadurch gekennzeichnet, dass** das System (100) eingerichtet ist, Daten (D) betreffend zumindest einen/den Bewegungspfad (9) entlang wenigstens zweier Fertigungslinienabschnitte (1.1) von wenigstens einer die Fertigungslinie (1) betreuenden Fachkraft (7) zu erfassen und in Reaktion auf ein/das Ereignis, insbesondere Stopp zumindest eine zeitlich vordefinierbare Sequenz des Bewegungspfads (9) der Fachkraft (7) mit wenigstens einem spezifischen Typ Stopp/Ereignis zu korrelieren, zum Generieren der wenigstens einen Handlungsempfehlung (5) und zum Ausgeben wenigstens einer Handlungsaufforderung (5a).

2. System nach Anspruch 1, wobei das System eingerichtet ist, in Reaktion auf einen Stopp die zuletzt erfassten Daten betreffend zumindest den Bewegungspfad oder die zeitlich vordefinierbare Sequenz des Bewegungspfads vor und/oder nach dem Stopp mit wenigstens einem Typ Stopp zu korrelieren und eine Handlungsaufforderung in Form von wenigstens einer Fehlerbehebungsmaßnahme zu generieren und an wenigstens einer visuellen und/oder akustischen Anzeigeeinheit (15) des Systems auszugeben, insbesondere binnen spätestens fünf bis zehn Sekunden nach erfolgtem Stopp, vorteilhaft mit der visuellen und/oder akustischen Ausgabe örtlich vorgegeben im Bereich wenigstens eines betroffenen Fertigungslinienabschnitts.

3. System nach einem der vorhergehenden Ansprüche, wobei die zeitlich vordefinierbare Sequenz des Bewegungspfads auf ein Zeitfenster von mindestens drei Sekunden vor dem Stopp und/oder mindestens fünf Sekunden nach dem Stopp definiert ist/wird; und/oder wobei systemseitig wenigstens ein Wiedergabe-Zeitfenster für das Ausgeben der wenigstens einen Handlungsaufforderung definiert ist/wird, insbesondere zumindest ein erstes Wiedergabe-Zeitfenster für das Ausgeben einer ersten Handlungsaufforderung und ein zweites Wiedergabe-Zeitfenster für das Ausgeben einer zweiten Handlungsaufforderung; und/oder wobei systemseitig wenigstens eine Wiedergabe-Position für das Ausgeben der wenigstens einen Handlungsaufforderung definiert ist/wird, insbesondere zumindest eine erste Wiedergabe-Position für das Ausgeben einer/der ersten Handlungsaufforderung und eine zweite Wiedergabe-Position für das Ausgeben einer/der zweiten Handlungsaufforderung.

4. System nach einem der vorhergehenden Ansprüche, wobei das System eingerichtet ist, das Generieren der wenigstens einen Handlungsempfehlung zumindest teilweise basierend auf im Datenspeicher hinterlegten Daten durchzuführen, insbesondere nach erfolgtem Korrelieren; und/oder wobei wenigstens ein spezifischer Typ Stopp mit wenigstens einem Fehlermerkmal (f1, f2, ...) korreliert ist/wird, insbesondere wenigstens einem Fehlermerkmal aus der folgenden Gruppe: Fehlerposition, Fehlerzeitpunkt, Chargen-Identifikationsmerkmal, Fertigungslinien-Identifikationsmerkmal, funktionaler Bearbeitungsschritt, räumliche Ausrichtung des Werkstücks; insbesondere spezifisch unter Bezugnahme auf eine bestimmte Fertigungslinie und/oder eine bestimmte Verpackungsmaterial-Charge.

5. System nach einem der vorhergehenden Ansprüche, wobei das System eingerichtet ist, zumindest das Erfassen und stoppabhängig auch ein/das Korrelieren basierend auf wenigstens einem Leistungs-/Outputparameter durchzuführen, insbesondere in Abhängigkeit von einer Schwankung des wenigstens einen Leistungs-/Outputparameters, insbesondere bei Überschreiten einer vordefinierbaren Abweichung von einem Soll-Leistungs-/Outputparameter.

6. System nach einem der vorhergehenden Ansprüche, wobei das System eingerichtet ist, zumindest das Korrelieren und/oder zumindest das Erfassen mittels wenigstens eines oder basierend auf wenigstens einem ML-Algorithmus durchzuführen.

7. Fertigungslinie (1) für zumindest teilweise automatische Bearbeitung von Verpackungsmaterial (3), aufweisend ein System (100) nach einem der vorhergehenden Ansprüche.

8. Verfahren zum Monitoring von wenigstens einem Typ Ereignis, insbesondere Stopp einer offen zugänglichen Fertigungslinie (1) für zumindest teilweise automatische Bearbeitung von Verpackungsmaterial (3), zum Erkennen von den wenigstens einen Typ Ereignis, insbesondere Stopp hervorrufender Fehler oder Ursachen, und zum Generieren (S3) wenigstens einer visuell und/oder akustisch erfassbaren Handlungsempfehlung (5) zur Fehlerbehebung insbesondere für wenigstens eine die Fertigungslinie (1) bedienende Fachkraft (7), wobei eine Mehrzahl von die Funktionsweise der Fertigungslinie (1) überwachenden Sensoren (11) und eine Mehrzahl von optischen Erfassungseinheiten (13) in Kommunikation mit einer Recheneinheit (10) mit Datenspeicher stehen, wobei die optischen Erfassungseinheiten (13) mit einem Sichtfeld (13a) von oben einen entsprechenden Fertigungslinienabschnitt (1.1) einsehen;
**dadurch gekennzeichnet, dass** Daten (D) betreffend zumindest den Bewegungspfad (9) entlang wenigstens zweier Fertigungslinienabschnitte (1.1) von wenigstens einer die Fertigungslinie (1) betreuenden Fachkraft (7) erfasst werden und in Reaktion auf ein/das Ereignis, insbesondere Stopp zumindest eine zeitlich vordefinierbare Sequenz des Bewegungspfads der Fachkraft mit wenigstens einem spezifischen Typ Ereignis/Stopp korreliert wird, zum Generieren (S3) der wenigstens einen Handlungsempfehlung (5) und zum Ausgeben wenigstens einer Handlungsaufforderung (5a) in Dateiform und/oder an wenigstens einer visuellen und/oder akustischen Anzeigeeinheit (15).

9. Verfahren nach dem vorhergehenden Verfahrensanspruch, wobei in Reaktion auf einen Stopp die zuletzt erfassten Daten betreffend zumindest den Bewegungspfad oder die zeitlich vordefinierbare Sequenz des Bewegungspfads vor/nach dem Stopp gespeichert werden und mit wenigstens einem Typ Stopp korreliert werden und eine Handlungsaufforderung in Form von wenigstens einer Fehlerbehebungsmaßnahme generiert wird und an wenigstens einer visuellen und/oder akustischen Anzeigeeinheit oder der entsprechenden Fertigungslinie ausgegeben wird.

10. Verfahren nach einem der vorhergehenden Verfahrensansprüche, wobei die zeitlich vordefinierbare Sequenz des Bewegungspfads auf ein Zeitfenster von mindestens drei Sekunden vor dem Stopp und/oder mindestens fünf Sekunden nach dem Stopp vorgegeben wird; und/oder wobei wenigstens ein Wiedergabe-Zeitfenster für das Ausgeben der wenigstens einen Handlungsaufforderung vorgegeben wird, insbesondere zumindest ein erstes Wiedergabe-Zeitfenster für das Ausgeben einer ersten Handlungsaufforderung und ein zweites Wiedergabe-Zeitfenster für das Ausgeben einer zweiten Handlungsaufforderung; und/oder wobei wenigstens eine Wiedergabe-Position für das Ausgeben der wenigstens einen Handlungsaufforderung vorgegeben wird, insbesondere zumindest eine erste Wiedergabe-Position für das Ausgeben einer/der ersten Handlungsaufforderung und eine zweite Wiedergabe-Position für das Ausgeben einer/der zweiten Handlungsaufforderung.

11. Verfahren nach einem der vorhergehenden Verfahrensansprüche, wobei das Ausgeben basierend auf einem Zeitraffer erfolgt, insbesondere indem die in Reaktion auf einen Stopp zuletzt erfassten Daten betreffend zumindest den Bewegungspfad oder die entsprechend zeitlich vordefinierte Sequenz des Bewegungspfads als Video in mindestens um den Faktor zwei reduzierter Ablauf-Geschwindigkeit ausgegeben werden.

12. Verfahren nach einem der vorhergehenden Verfahrensansprüche, wobei zumindest das Erfassen und stoppabhängig auch ein/das Korrelieren basierend auf wenigstens einem Leistungs-/Outputparameter erfolgt, insbesondere in Abhängigkeit von einer Schwankung des wenigstens einen Leistungs-/Outputparameters, insbesondere bei Überschreiten einer vordefinierbaren Abweichung von einem Soll-Leistungs-/Outputparameter.

13. Verfahren nach einem der vorhergehenden Verfahrensansprüche, wobei zumindest das Korrelieren mittels wenigstens eines oder basierend auf wenigstens einem ML-Algorithmus erfolgt, insbesondere basierend auf wenigstens einem für die stoppabhängige Fehlererkennung implementierten KI-Modell; und/oder wobei zumindest das Erfassen mittels wenigstens eines oder basierend auf wenigstens einem ML-Algorithmus erfolgt, insbesondere basierend auf wenigstens einem für das Erkennen einer Bewegung einer Fachkraft implementierten KI-Modell, insbesondere für das Auswerten einer/der momentanen Bewegung einer Fachkraft im Kontext einer fehlerspezifischen Handlungsempfehlung/-aufforderung.

14. Computerprogrammprodukt (20) umfassend Befehle, die bei Ausführung des Computerprogrammproduktes auf einem Computer diesen dazu veranlassen, Schritte zum Steuern/Regeln eines Verfahrens nach einem der vorhergehenden Verfahrensansprüche auf dem Computer auszuführen, insbesondere Computerprogrammprodukt (20) eingerichtet zum Vorgeben der Art und Weise eines Ausgebens wenigstens einer Handlungsempfehlung (5) beim Monitoring von wenigstens einem Typ Ereignis, insbesondere Stopp einer offen zugänglichen Fertigungslinie (1) für zumindest teilweise automatische Bearbeitung von Verpackungsmaterial (3), insbesondere eingerichtet zum Vorgeben der Art und Weise eines Erfassens von körperlichen Bewegungen wenigstens einer Fachkraft (7) und zum Vorgeben von Zeitpunkten (T1, T2) und/oder Positionen (P2) beim Generieren und Ausgeben wenigstens einer Handlungsempfehlung (5) und/oder Handlungsaufforderung (5a) zur Fehlerbehebung insbesondere in Reaktion auf einen und in zeitlichem Zusammenhang mit einem/dem Ereignis, insbesondere Stopp.

15. Verwendung eines in Kommunikation mit einer Mehrzahl von die Funktionsweise einer offen zugänglichen Verpackungsmaterial-Fertigungslinie (1) überwachenden Sensoren (11) und mit einer Mehrzahl von optischen Erfassungseinheiten (13) stehenden Systems (100) mit Recheneinheit (10) und Datenspeicher und Kommunikationsmodul (80) zum Monitoring von wenigstens einem Typ Ereignis, insbesondere Stopp der Fertigungslinie (1), zum Erkennen von den wenigstens einen Typ Ereignis/Stopp hervorrufender Fehler oder Ursachen, und zum Generieren (S3) wenigstens einer visuell und/oder akustisch erfassbaren Handlungsempfehlung (5) zur Fehlerbehebung für wenigstens eine die Fertigungslinie (1) betreuende Fachkraft (7), wobei die optischen Erfassungseinheiten (13) einen entsprechenden Fertigungslinienabschnitt (1.1) einsehend entlang der Fertigungslinie (1) angeordnet sind/werden, wobei Daten (D) betreffend zumindest den Bewegungspfad (9) entlang wenigstens zweier Fertigungslinienabschnitte (1.1) von wenigstens einer Fachkraft (7) erfasst werden, wobei in Reaktion auf ein/das Ereignis, insbesondere Stopp zumindest eine zeitlich vordefinierbare Sequenz des Bewegungspfads (9) der entsprechenden Fachkraft, insbesondere ein Verlauf über mehrere Sekunden unmittelbar nach dem Ereignis/Stopp, mit wenigstens einem spezifischen Typ Ereignis, insbesondere Stopp korreliert wird, zum Generieren der wenigstens einen Handlungsempfehlung (5) und zum Ausgeben wenigstens einer Handlungsaufforderung (5a).
